# EUROPEAN PATENT APPLICATION

(11) **EP 1 035 732 A1**
(43) Date of publication of application: **13.09.2000**
(21) Application number: 98944238.9
(22) Date of filing: 24.09.1998
(51) Int. Cl.: H04N 5/44

(54) **APPARATUS AND METHOD FOR PRESENTING SOUND AND IMAGE**

(71) Applicant: Fourie Inc., Tokyo 154-0017 (JP)
(72) Inventor: NISHIDA, Shinsuke, Setagaya-ku, Tokyo 154-0017 (JP)
(74) Representative: Hirsch, Peter
(86) International application number: JP9804301
(87) International publication number: WO0018112

(57) **Abstract**

A display (100) with a display screen (110) for presenting video, and an acoustic device (200) having speakers (210 - 240) placed around the display screen for presenting sound so that a sound image is formed in a particular region of the display screen, are disposed. Presentation information (I) containing video data (V) for presenting image , audio data (A) for presenting sound, and region data (T) defining the region in which image and sound are to be reproduced, is stored in a storage device (500). A video player (300) reproduces an image based on the video data in a particular region on the display, and an audio player (400) reproduces sound based on the audio data using the plural speakers so that a sound image is formed in the sound reproduction region (shaded part) of the display. Low level audio data comprising engine sound only, and high level audio data comprising the overall sound of an automobile, are prepared and can be appropriately selectively reproduced. When the engine part of the video is displayed enlarged, the volume of the engine sound is amplified.

## Description

### Technical Field

The present invention relates to technology for presenting audio and video together, and relates more particularly to technology for presenting audio and video to an audience using a large-screen display.

### Background Art

Technologies for handing audio and video as digital data have become common in conjunction with improvements in computer performance. Today it is even possible to use a personal computer at home to reproduce audio and video contained in various digital contents. Technologies for increasing the size of display devices have also advanced rapidly, and opportunities to see large-screen displays used outdoors in public as electronic bulletin boards and advertising billboards are increasing.

Technologies for displaying digital images on a large-screen display are taught, for example, in PCT international publication WO96/10244 (USP 5,767,818), WO97/25705 (U.S. Patent Application 08/894,883), and WO97/36279 (U.S. Patent Application 08/952,135). By arranging a large number of display elements in a matrix, these technologies enable digital images to be presented by means of an extremely efficient technique using a large-screen display suitable for installation in a public place. Technology for imparting a sense of integration to the presented audio and video is also taught in WO97/03433 (U.S. Patent Application 08/793,625).

With the above-noted conventional technologies, however, it is difficult to present audio and video sufficiently matched to each other. Insofar as the inventor of the present invention are aware, a presentation method whereby sufficient harmony matching audio and video is maintained when, for example, a plurality of images each with related audio is simultaneously presented, or an image containing an audio source is enlarged or reduced, is not known.

Therefore, an object of the present invention is to provide a presentation method and presentation device enabling audio and video to be presented with harmony maintained therebetween.

### Disclosure of Invention

(1) The first feature of the present invention resides in a device for presenting audio and video, comprising:
   a display device having a display screen for presenting video;
   an acoustic device for presenting sound so that a sound image is formed in a desired region of the display screen, and having a plurality of sound sources positioned around the display screen;
   a presentation information storage device for storing presentation information containing video data for an image to be presented, audio data for sound to be presented, and region data indicative of a sound reproduction region for reproducing the audio data;
   a video reproducing device for reproducing an image based on the video data in a particular video reproduction region on the display screen; and
   an audio reproducing device for reproducing sound based on the audio data using the plurality of sound sources of the acoustic device so that a sound image is formed in the sound reproduction region on the display screen.
(2) The second feature of the present invention resides in a device for presenting audio and video according to the first feature, wherein:
   region data is indicative of a sound reproduction region for reproducing audio data, and includes information indicative of a video reproduction region for reproducing video data.
(3) The third feature of the present invention resides in a device for presenting audio and video according to the first or second feature, further comprising:
   a command input device for entering an operator command; and
   a presentation mode controller for modifying presentation information in the presentation information storage device and changing presentation of audio and video based on the command.
(4) The fourth feature of the present invention resides in a device for presenting audio and video according to the first to the third features, further comprising:
   a data reading device for reading presentation information recorded in a data storage medium, and accomplishing a process for storing it in the presentation information storage device.
(5) The fifth feature of the present invention resides in a device for presenting audio and video according to the first to fourth features, wherein:
   a display device having a rectangular display screen, and an acoustic device having four sound sources disposed to source positions located substantially at four corners of the display screen, are used;
   sound reproduction region is defined as a rectangular region, and representative, positions representing the sound reproduction region are defined at four corner positions of the rectangular region;
   four channel acoustic signals correspond respectively to the four representative positions when audio data for reproduction in the sound reproduction region comprises four channel acoustic signals; and
   sound is reproduced by the audio reproducing device so that a sound image of a corresponding acoustic signal is achieved at a location of a corresponding representative position by controlling volume according to a distance between the source positions and the location.
(6) The sixth feature of the present invention resides in a device for presenting audio and video according to the first to fourth features, wherein:
   a display device having a rectangular display screen, and an acoustic device having four sound sources disposed to source positions located substantially at four corners of the display screen, are used;
   sound reproduction region is defined as a rectangular region, and representative positions representing the sound reproduction region are defined at four corner positions of this rectangular region;
   a left channel acoustic signal corresponds to left two of the four representative positions, and a right channel acoustic signal corresponds to right two of the four representative positions, when audio data to be reproduced in the sound reproduction region is a two-channel stereo acoustic signal; and
   sound is reproduced by the audio reproducing device so that a sound image of a corresponding acoustic signal is achieved at a location of a corresponding representative position by controlling volume according to a distance between the source positions and the location.
(7) The seventh feature of the present invention resides in a device for presenting audio and video according to the first to fourth features, wherein:
   a display device having a rectangular display screen, and an acoustic device having four sound sources disposed to source positions located substantially at four corners of the display screen, are used;
   sound reproduction region is defined as a rectangular region, and representative positions representing the sound reproduction region are defined at four corner positions of this rectangular region;
   a monaural acoustic signal corresponds to each of the four representative positions when audio data to be reproduced in the sound reproduction region is a monaural signal; and
   sound is reproduced by the audio reproducing device so that a sound image of a corresponding acoustic signal is achieved at a location of a corresponding representative position by controlling volume according to a distance between the source positions and the location.
(8) The eighth feature of the present invention resides in a device for presenting audio and video according to the first to seventh features, wherein:
   sound is reproduced by the audio reproducing device to achieve a superimposed sound image based on the audio data when a plurality of audio data for reproduction in different sound reproduction regions is prepared.
(9) The ninth feature of the present invention resides in a device for presenting audio and video according to the first to seventh features, wherein:
   the device comprises a function to simultaneously present plural sets of presentation information having mutually overlapping region data,
   an order of priority is defined for the plural sets of presentation information,
   only video for presentation information with high priority is reproduced for mutually overlapping parts and video for low priority presentation information is hidden, and
   volume is lowered an amount corresponding to an area of a hidden part of an image when reproducing audio for the presentation information.
(10) The tenth feature of the present invention resides in a device for presenting audio and video according to the first to seventh features, wherein:
   when plural audio data to be reproduced in different sound reproduction regions is prepared, only audio data for a particular sound reproduction region selected in accordance with operator input is reproduced.
(11) The eleventh feature of the present invention resides in a method for presenting video on a specific display screen, and presenting audio related to the video, comprising the steps of:
   preparing video data for reproducing an image picture in which a region with a hierarchical structure is defined so that a high level region contains one or a plurality of low level regions, a low level region sound source being displayed in a low level region and a high level region sound source containing the low level region sound source being displayed in the high level region;
   preparing audio data for reproducing sound produced by the low level region sound source, and sound produced by the high level region sound source; and
   reproducing all or part of the image picture based on the video data, and reproducing sound relating to a specific sound source based on the audio data.
(12) The twelfth feature of the present invention resides in a method for presenting audio and video according to the eleventh feature, wherein:
   when a command is inputted to select a particular sound source in an image picture being reproduced, sound relating to the particular sound source is selectively reproduced.
(13) The thirteenth feature of the present invention resides in a method for presenting audio and video according to the twelfth feature, wherein:
   when a command is inputted to display a particular low level region sound source enlarged, a region containing the particular low level region sound source is displayed enlarged, and sound relating to the particular low level region sound source is selectively reproduced.
(14) The fourteenth feature of the present invention resides in a method for presenting audio and video according to the eleventh feature, wherein:
   an image picture can be displayed desirably enlarged or reduced, and sound relating to a sound source at the highest level currently displayed in entirety is selectively reproduced.
(15) The fifteenth feature of the present invention resides in a method for presenting audio and video according to the fourteenth feature, wherein:
   volume of sound relating to a sound source is controlled according to enlargement/reduction ratio at which the sound source is displayed.
(16) The sixteenth feature of the present invention resides in a method for presenting audio and video according to the eleventh feature, wherein:
   volume of an individual sound source can be set to a specific volume level based on an operator's instruction, and when sound relating to a sound source for which a specific volume level is set is reproduced, reproduction occurs at the set volume level.
(17) The seventeenth feature of the present invention resides in a method for presenting audio and video according to the eleventh feature, wherein:
   sound for a low level region sound source is recorded by placing near the low level region sound source a microphone with directivity capable of gathering sound produced primarily by the low level region sound source,
   sound for a high level region sound source is recorded by placing at a position appropriate to gathering overall sound produced by the high level region sound source a microphone with directivity capable of gathering the overall sound produced by the high level region sound source, and
   preparing audio data based on signals obtained from recorded sound.

### Brief Description of Drawings

Fig. 1 is a plan view showing an example of an image of an automobile presented on a large-screen display.
Fig. 2 is a plan view showing a method for presenting sound so that a sound image of engine noise is formed in one area in the image shown in Fig. 1.
Fig. 3 is a block diagram showing the configuration of presentation information I used in a device for presenting audio and video according to the present invention.
Fig. 4 is a block diagram showing an example of the structure of the presentation information shown in Fig. 3.
Fig. 5 is used to describe the principle of an exemplary method for segmenting a display image and presenting one of the segmented areas as digital data.
Fig. 6 shows an example of a bit expression in the method shown in Fig. 5.
Fig. 7 is a block diagram showing an example of presentation information constructed using the method shown in Fig. 5.
Fig. 8 is a plan view of a sample display in which audio and video are presented in part of the display screen by means of the method of the present invention, and a block diagram showing the presentation information for this presentation.
Fig. 9 is a plan view of another sample display in which audio and video are presented in part of the display screen by means of the method of the present invention, and a block diagram showing the presentation information for this presentation.
Fig. 10 is a plan view of a further sample display in which audio and video are presented in part of the display screen by means of the method of the present invention, and a block diagram showing the presentation information for this presentation.
Fig. 11 is a plan view showing a case in which two different sound sources are presented in a same screen by means of a method according to the present invention.
Fig. 12 shows the presentation information to be prepared for accomplishing the presentation shown in Fig. 11.
Fig. 13 is a plan view showing a case in which two sets of sound sources with a hierarchical structure are presented in a same screen by means of a method according to the present invention.
Fig. 14 shows the presentation information to be prepared for accomplishing the presentation shown in Fig. 13.
Fig. 15 is a plan view showing another case in which two sets of sound sources with a hierarchical structure are presented in a same screen by means of a method according to the present invention.
Fig. 16 shows the presentation information to be prepared for accomplishing the presentation shown in Fig. 15.
Fig. 17 is a plan view showing a case in which six sets of sound sources with a hierarchical structure are presented in a same screen by means of a method according to the present invention.
Fig. 18 shows the presentation information to be prepared for accomplishing the presentation shown in Fig. 17.
Fig. 19 shows presentation of only one of the six sound sources shown in Fig. 17.
Fig. 20 is a plan view showing an enlarged presentation of the one sound source shown in Fig. 19.
Fig. 21 shows the presentation information to be prepared for accomplishing the presentation shown in Fig. 20.
Fig. 22 is a plan view showing an enlarged presentation of the two sound sources shown in Fig. 17.
Fig. 23 shows part of the presentation information to be prepared for accomplishing the presentation shown in Fig. 22.
Fig. 24 is a plan view showing an example in which a plurality of sound sources having a hierarchical structure are presented in a same image by means of a method according to the present invention.
Fig. 25 shows the presentation information to be prepared for accomplishing the presentation shown in Fig. 24.
Fig. 26 is a plan view showing an enlarged presentation of part of the sound source shown in Fig. 24.
Fig. 27 shows the presentation information to be prepared for accomplishing the presentation shown in Fig. 26.
Fig. 28 is a plan view showing a different way to define the plural sound sources shown in Fig. 24.
Fig. 29 shows presentation information corresponding to the sound source definition shown in Fig. 28.
Fig. 30 is a plan view showing a separate video presentation using the sound source definition shown in Fig. 28.
Fig. 31 shows the presentation information to be prepared for accomplishing the presentation shown in Fig. 30.
Fig. 32 is a front view showing the relative positions of a sound source and display screen in a device for presenting audio and video according to the present invention.
Fig. 33 is used to describe a method for forming a sound image in a specific area of the display screen using the device shown in Fig. 32.
Fig. 34 is a block diagram showing the configuration of presentation information containing four channel sound data.
Fig. 35 shows a method for calculating an audio playback signal applied to each speaker based on the presentation information shown in Fig. 34.
Fig. 36 is a front view showing simultaneous presentation of two sets of presentation information using the device shown in Fig. 32.
Fig. 37 shows the presentation information to be prepared for accomplishing the presentation shown in Fig. 36.
Fig. 38 is a front view showing simultaneous presentation of four sets of presentation information using the device shown in Fig. 32.
Fig. 39 shows the presentation information to be prepared for accomplishing the presentation shown in Fig. 38.
Fig. 40 shows a practicable configuration of video data and audio data to be prepared for accomplishing the audio and video presentation method according to the present invention.
Fig. 41 is a plan view of areas having a defined hierarchical structure when accomplishing the audio and video presentation method according to the present invention.
Fig. 42 is a block diagram showing the basic configuration of a device for presenting audio and video according to the present invention.

### Best Mode for Carrying Out the Invention

The preferred embodiments of the present invention are described below with reference to the accompanying figures.

### 〈1〉 Basic concept of the present invention

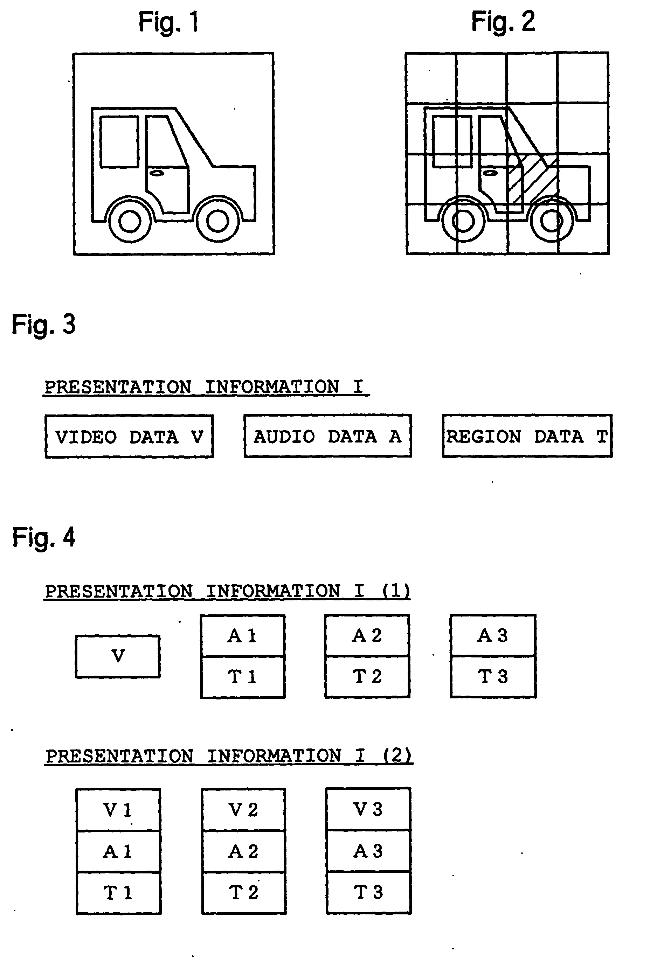

Consider a case in which a picture of an automobile is presented on a large-screen display as shown in Fig. 1. This image of an automobile can be a still image or a moving picture image. It is herein further assumed that the automobile is displayed stopped with the engine running, and its engine hood part of the image is vibrating. The sound of the engine is also added to this moving picture (video) image.

Methods for simultaneously presenting audio and video have been used in movies and videos for a long time, and methods for presenting multichannel audio using stereo speakers or four speaker channels are also widely used. However, methods that have been conventionally used cannot accurately present the area forming the sound image of the engine noise.

For example, when sound is added to the image shown in Fig. 1 with a conventional method, it is possible to add an effect whereby the engine noise is heard from the vicinity of the engine in the image by shifting the location of the sound image slightly to the right of the center of the visual image. To achieve this effect, multiple microphones are placed to capture a multichannel sound signal when recording the image, and sound signals for each channel are reproduced using a plurality of speakers placed according to the locations of the microphones.

While it is thus possible to communicate information relating to a vague location of the engine noise, perceived as coming from the bottom right part of the image, it is not possible to accurately present the relationship between the location of the sound and the location of the sound source (the engine, in this example) in the image so that the engine noise is heard as coming from the location of the engine in the displayed image of the automobile. Of course, there is little need to precisely present the location of the sound source when presenting audio and video using a relatively small display such as used in the home. However, when audio and video are presented using a large-screen display such as installed on buildings and in public places for presenting information to a large number of people, the ability to present information with a great sense of realism increases if sound is more accurately positioned and associated with the sound source location in the image.

The present invention was conceived from this idea, and the basic concept is to add to the audio signal of each sound source a data specifying the region in which the corresponding sound image should be formed.

Let us consider, for example, the above-noted case of an automobile. In this case, the image area is divided into 16 blocks as shown in Fig. 2, the block shaded in the figure is defined as the sound reproduction region for the engine noise, and information pointing to this sound formation region is added to the audio signal of the engine noise. During playback, the image of the automobile is reproduced on the display screen, and the engine noise is reproduced so that the sound image of the engine noise appears to be in this sound reproduction region. As shown by the shaded area in Fig. 2, this sound reproduction region corresponds to the location of the engine in the automobile image, and by forming a sound image of the engine noise in this region, the displayed information can be reproduced with greater presence.

The audio and video presentation method of the present invention differs fundamentally from a conventional stereo audio reproduction method in that the method of the present invention defines a sound reproduction region having area. That is, the impression received by an audience viewing the presentation of information in the example shown in Fig. 2 is that the engine noise is heard from the engine area of the automobile shown in the picture, and not that the engine noise is simply heard from the lower right area of the picture.

It should be noted that while a specific method for presenting sound so that a sound image is achieved in a flat two-dimensional region with area is described in detail in section 6 below, a sound image with a two-dimensional diffusion on the display screen can be achieved by placing a plurality of sound sources (i.e., speakers) around the display screen.

Fig. 3 is a block diagram showing the configuration of presentation information I used in a device for presenting audio and video according to the present invention. As shown in the figure, presentation information I comprises video data V, audio data A, and region data T. The video data V is data indicative of the image to be presented. In the example shown in Fig. 2, this video data V is the moving picture data of an automobile stopped with the engine running. The audio data A is data indicative of the sound to be presented, and is typically data indicative of a sound source (the engine in the example in Fig. 2) in the image presented according to the video data V. The region data T is data indicative of the sound reproduction region where the audio data A is to be reproduced, and in the example shown in Fig. 2 is data indicative of the rectangular shaded area.

To achieve the present invention the presentation information I can be constructed with the three data types, i.e. video data V, audio data A, and region data T as shown in Fig. 3. It should be further noted that the configuration of presentation information I can be varied appropriately according to the content of the information to be presented. For example, if the sound reproduction region is the same for the entire time from when the engine noise is introduced until it ends, presentation information I can comprise only one each of the video data V, audio data A, and region data T blocks as shown in Fig. 3.

It is also possible for the sound reproduction region to change over time, such as the case when starter noise A1, heard when the engine is started by the starter motor, is presented with region T1, the area where the starter motor is located, as the sound reproduction region; idling noise A2 after the engine starts is then heard with region T2 where the overall engine is located defined as the sound reproduction region; and engine noise A3 then heard when the accelerator is depressed and the engine speed increased presented from region T3, which corresponds to the entire automobile as the sound reproduction region because vibration is transferred to the entire automobile. A presentation such as this can be achieved as shown by presentation information I(1) in Fig. 4 by preparing a first audio data and region data set A1, T1 for reproduction when the starter is heard, a second data set A2, T2 reproduced when the engine is idling, and a third data set A3, T3 for reproduction at high engine speed.

It will also be obvious that a video data set comprising video data V1 showing an image of the automobile when starting, video data V2 when idling, and video data V3 when the engine is running at high speed can be alternatively generated as shown by presentation information I(2) in Fig. 4.

### 〈2〉 Region data configuration

As described above, region data is prepared to define the sound reproduction region in which audio data A is reproduced. A specific example of generating this region data is described next below.

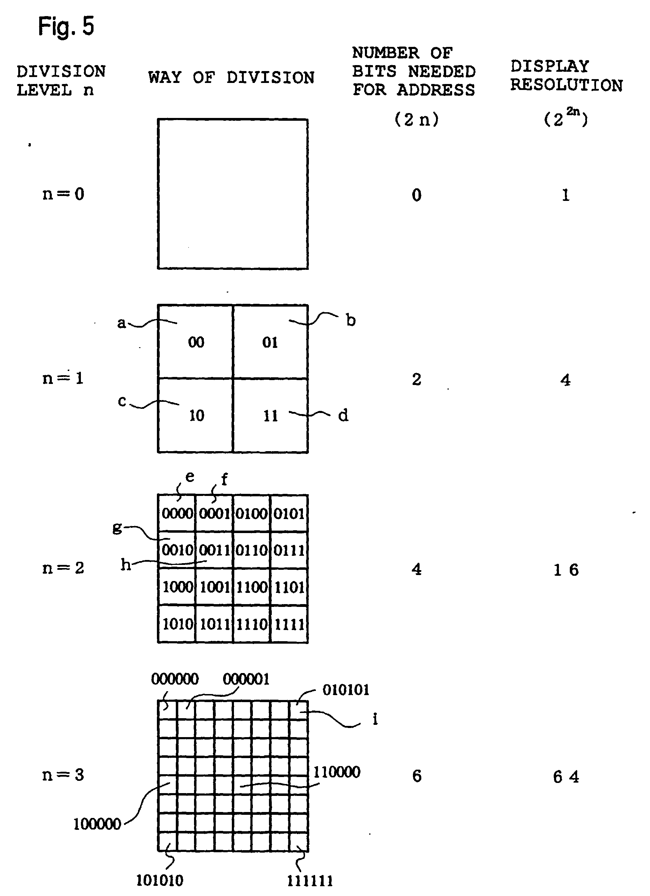

Fig. 5 is used to describe the principle of an exemplary method for dividing a display image into blocks and presenting one of these blocks as region data. Four methods of dividing the digital screen into a plurality of blocks, and an address defined for each block obtained by the corresponding screen division method, are shown. Each division method is indicated, by a division level n.

The division method shown in the first row is indicated as division level n = 0, in which case the screen is not actually segmented at all. In other words, the entire display screen belongs to the single block. The division method shown in the second row is indicated

as division level n = 1, and segments the screen into two parts vertically and horizontally, resulting in a total four blocks. As a result, the display screen is divided into four blocks a, b, c, and d.

The division method shown in the third row is indicated as division level n = 2, and divides the screen into four parts vertically and horizontally, resulting in a total sixteen blocks.

The division method shown in the fourth row is indicated as division level n = 3, and divides the screen into eight parts vertically and horizontally, resulting in a total sixty-four blocks.

Division levels only up to n = 3 are shown in this example, but the number of segments can be continued to be increased in the same manner such that at division level n = 8, for example, the display screen is divided into 256 parts vertically and horizontally to form a total 65,536 blocks. In other words, a division method expressed as division level n divides a two dimensional picture element array into 2ⁿ parts vertically and horizontally, resulting in 2²ⁿ blocks.

Once a plurality of division methods can be thus defined, addresses indicative of each block are defined for each division method. In the example shown in Fig. 5, an address is not defined for division, level n = 0 (because there is only one block and an address is not needed). For the four blocks obtained by the division method expressed as division level n = 1, however, a 2-bit address is defined for each block, that is, 00, 01, 10, 11 as shown in the figure. For the 16 blocks obtained by the division method expressed as division level n = 2, a 4-bit address is defined for each block, that is, 0000, 0001, 0010, 0011, and so forth as shown in the figure. For the 64 blocks obtained by the division method expressed as division level n = 3, a 6-bit address is defined for each block, that is, 000000, 000001, and so forth as shown in the figure.

With the method shown in Fig. 5, addresses are defined such that the addresses for the 2²ⁱ blocks obtained for a division method expressed as division level n = i are the same as the addresses for the 2²⁽ⁱ⁻¹⁾ blocks obtained by the division method expressed as division level n = (i-1), that is, the next lower division level, with one of the values 00, 01, 10, 11 appended to the low bit of the address.

For example, the addresses for blocks e, f, g, h obtained by the method where division level n = 2 are defined by appending 00, 01, 10, 11 to the low bit of the address 00 of block a (the block occupying the location as blocks e, f, g, h) obtained using the next lower division level n = 1. Which two bits should be appended to the low bit is determined by the same method used to define the address of the four block a, b, c, d. For example, because the relative positions of the four blocks e, f, g, h are the same as the relative positions of the four blocks a, b, c, d, the low 2 bits appended for the address of block e are the same as the address of block a, that is, 00; the low 2 bits of the address for block f are the same as the address of block b, that is, 01; the low 2 bits of the address for block g are the same as the address of block c, that is, 10; and the low 2 bits of the address for block h are the same as the address of block d, that is, 11.

It is, of course, not necessary to define addresses as described above in order to achieve the present embodiment of the invention, but an addressing method as described above is preferable with respect to reducing the calculation overhead and display efficiency. Furthermore, by using this addressing method, the address of the block in the same position obtained with the one lower division level can be obtained by removing the low two bits from the address of a particular block. In addition, the number of bits required for this addressing method is, as shown in Fig. 5, 2n bits. Yet further, the display resolution at each division level n, that is, the total number of blocks formed, is 2²ⁿ as shown in Fig. 5.

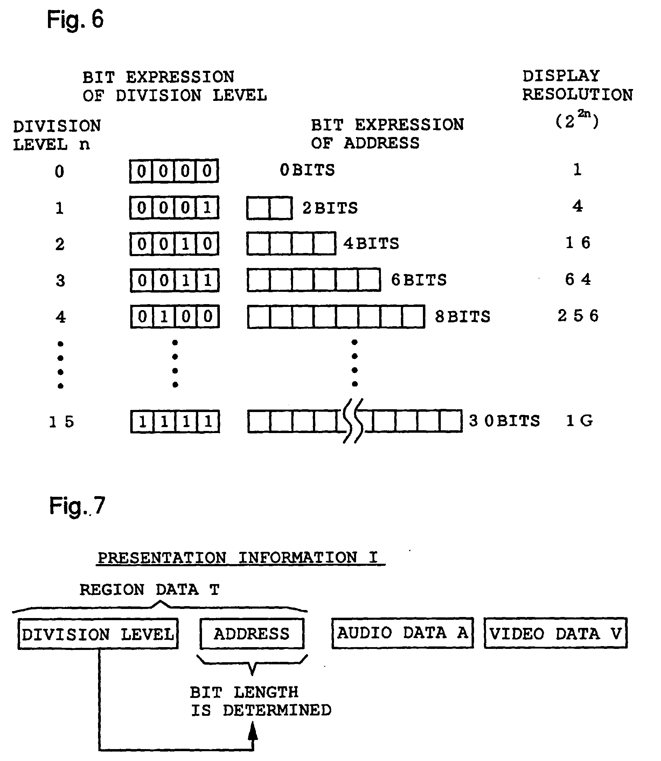

Fig. 6 shows the division levels and bit expression of the corresponding addresses for the division methods described above. In this example division level n is expressed with 4 bits, enabling sixteen division methods from n = 0 to n = 15 to be defined. The number of address bits needed to address each block differs as noted above for each division level, but in general the address requires an extra 2 bits for each increase of 1 in the division level. Therefore, a 30 bit address is needed at division level n = 15, for example, but at this division level a 1G high definition display resolution is achieved.

By defining region data T using the method described above in the present invention, presentation information I can be constructed as shown in Fig. 7. That is, region data T comprises a bit sequence indicative of the division level, and a bit sequence showing the address, and the length of the address bit sequence is determined by the division level. However, if a data configuration enabling the region data T, audio data A, and video data V to be mutually differentiated is used, the bit sequence showing the division level can be omitted. In this case, the division level can be determined from the length of the address bit sequence. For example, when the region data T is a 2-bit sequence such as 01, region data T can be recognized as pointing to block b at division level n = 1 in Fig. 5; when region data T is a 4-bit sequence such as 0001, it can be recognized as pointing to block f at division level n = 2 an Fig. 5. Furthermore, if there are no bits for region data T, region data T can be recognized as pointing to the entire display area equivalent to division level n = 0 in Fig. 5.

### 〈3〉 Specific presentation using the present invention

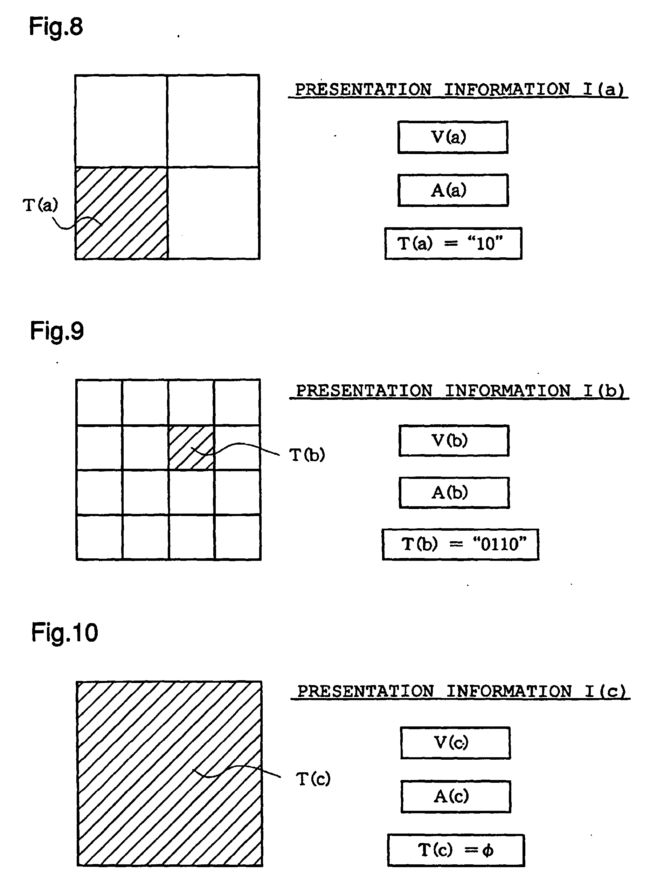

Fig. 8 is a plan view of a sample display in which audio and video are presented in part of the display screen by means of the method of the present invention, and a block diagram showing the presentation information for this presentation. The plan view on the left side of the figure shows the display screen segmented into four parts-with specific content presented in region T(a) shown shaded in the bottom left of the figure. This presentation can be achieved by preparing the presentation information I(a) shown on the right side of the figure. It should be noted that video data V(a) is the data for presenting video in the shaded region, and audio data A(a) is the data for sound presented as though the sound image is formed in the same region. Region data T(a) is likewise the data specifying the shaded region T(a). More specifically, using the method described in section 2 above, this region is defined using the 2-bit data sequence "10".

Another example is shown in Fig. 9. In this example the display screen is divided into 16 segments with the particular content presented in the shaded region T(b). This presentation can be achieved using the presentation information I(b) as shown on the right side of the figure. In this case, video data V(b) and audio data A(b) are data for presenting video and audio in the shaded area, and region data T(b) is the data specifying shaded area T(b). More specifically, using the method described in section 2 above, this region is defined using the 4-bit data sequence "0110."

Another example is shown in Fig. 10. In this example the particular content is presented in the entire display screen as indicated by the shading. This presentation can be achieved using the presentation information I(c) as shown on the right side of the figure. In this case, video data V(c) and audio data A(c) are data for presenting video and audio to the entire display screen, and region data T(c) is the data specifying shaded area T(c) as the entire display screen. More specifically, as described in section 2 above, region data T(c) is data that is not present as a bit sequence (that is, is the null parameter, shown by the symbol φ in the figures). The entire display screen is thus indicated by region data zero bits in length.

It should be noted here that when region data T(c) indicates the entire display screen as it does in Fig. 10, this does not mean that only monaural audio is reproduced. As described below in section 6, a plurality of sound sources (speakers) is placed around the display screen. Therefore, when the sound reproduction region is the entire area of the display screen, audio is presented using these plural sound sources so that a sound image with a two-dimensional diffusion equivalent to the entire screen is achieved. Therefore, this preferred embodiment of the present invention as shown in Fig. 10 is clearly different from a simple monaural audio reproduction in that sound is presented with diffusion equivalent to the sound reproduction region specified by the region data T(c).

It should be further noted that the volume of the presented sound is determined based on the volume data in audio data A(a), A(b), or A(c), and the size of the area of the shaded region is not directly related to the volume. It is, of course, also possible to use a method for adjusting the volume with consideration for the area of the sound reproduction region, and as described further below it is also possible to adjust the volume in conjunction with an operation increasing or decreasing the region.

In addition, region data T(a), T(b), and T(c) in the above example each define a sound reproduction region for generating a sound image, as well as a video reproduction region for reproducing video. For example, in the example shown in Fig. 8 the video shown by video data V(a) is reproduced in the shaded area shown by region data T(a), and the sound presented by audio data A(a) is reproduced so that a sound image is generated in the shaded area. When the video reproduction region and sound reproduction region are the same as in this example, region data T is used to define the sound reproduction region as well as to define the video reproduction region.

It is, of course, also possible to separately generate region data defining the sound reproduction region and region data defining the video reproduction region, and present audio and video in separate individual areas. For example, in the case of the automobile shown in Fig. 2, the image of the automobile is presented using the entire display screen, but the engine noise is presented so that a sound image is formed only in the shaded area. Thus, while the video reproduction region is the entire display area, the sound reproduction region is only part of this area as indicated by the shading. In such cases region data defining the video reproduction region can be omitted, and it is sufficient to provide only region data defining the sound reproduction region.

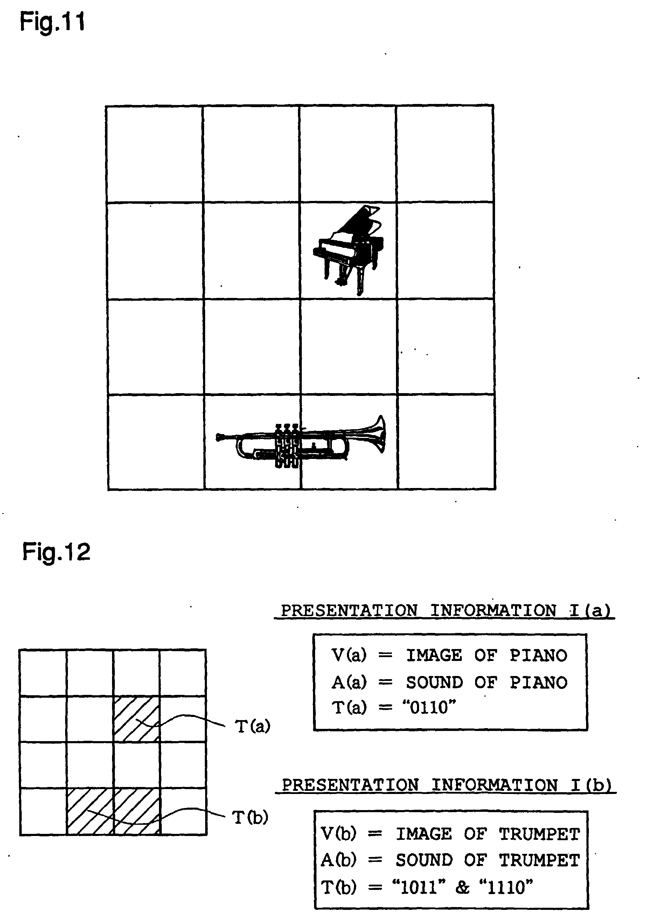

Fig. 11 is a plan view showing a case in which two different sound sources are presented in a same screen by means of a method according to the present invention. More specifically, the display screen is segmented into 16 blocks, a piano is displayed in one of these blocks, and a trumpet is displayed in a different two blocks.

Fig. 12 shows the presentation information to be prepared for accomplishing the presentation shown in Fig. 11. On the left in Fig. 12 is a block diagram of the display screen; the regions in which a sound source (a piano and trumpet in this example) is located are shaded. Presentation information I(a) relating to the piano is presented in region T(a), and presentation information I(b) relating to the trumpet is presented in region T(b).

As shown on the right in Fig. 12, presentation information I(a) comprises video data V(a) consisting of an image of the piano, audio data A(a) consisting of the sound of a piano performance, and region data T(a) defining the region in which these are presented. Likewise, presentation information I(b) comprises video data V(b) consisting of an image of the trumpet, audio data A(b) consisting of the sound of a trumpet performance, and region data T(b) defining the region in which these are presented. More specifically, region data T(a) is the bit sequence "0110" defining the video reproduction region and sound reproduction region relating to presentation information I(a). In addition, region data T(b) comprises the bit sequences "1011" and "1110" defining the video reproduction region and sound reproduction region relating to presentation information I(b).

When presentation to the display screen is based on these two sets of presentation information I(a) and I(b), a result as shown in Fig. 11 is achieved. The audience is thus able to recognize a piano and a trumpet in the respective regions T(a) and T(b), a sound image of the piano performance is obtained from the region T(a) where the image of a piano is seen, and a sound image of the trumpet performance is obtained from the region T(b) where the image of a trumpet is seen. By thus matching the location of each sound to the location of the image of each sound source, presentation of audio and video with a strong sense of presence can be achieved.

It should be noted that while an example in which two sound sources are presented is described above with reference to Fig. 11, the same method can be used to present three or more sound sources. Furthermore, while the presentation area (video reproduction region and sound reproduction region) of each sound source is expressed as a set of blocks segmenting the display screen into 16 parts in the example shown in Fig. 11, the shape of the presentation area can be more accurately defined by increasing the number of blocks into which the display screen is segmented. For example, if the presentation areas are defined using a set of blocks segmenting the display screen into 100 parts or more, for example, a presentation area close to the actual contour of the piano, trumpet, or other instrument can be defined. However, human auditory perception is not able to recognize the shape of a sound image to such detail, and in practice it is therefore sufficient to define the presentation area using a relatively coarse division of blocks such as shown in Fig. 11.

### 〈4〉 Presentation using a sound source definition with a hierarchical structure (1)

Another feature of the present invention is that a sound source can be defined with a hierarchical structure, and this hierarchical structure information can be presented to the audience. This feature is described more fully with reference to a specific example below.

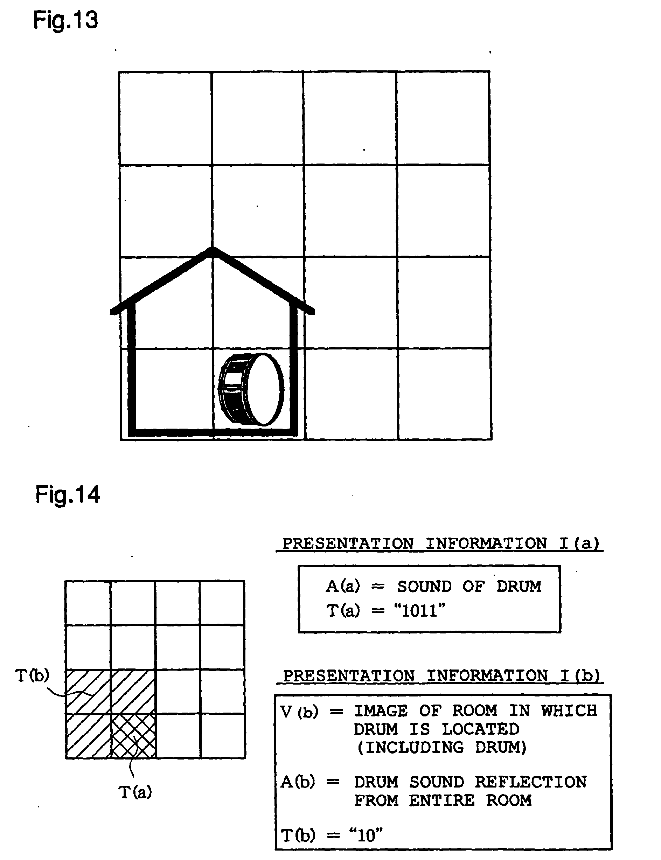

Fig. 13 is a plan view showing a case in which two sets of sound sources with a hierarchical structure are presented in a same screen by means of a method according to the present invention. In this example the display screen is segmented into 16 blocks; in the bottom left part are shown an image of a drum and a room in which this drum is located. (The block lines can be displayed as needed, or not displayed.) Fig. 14 shows the presentation information to be prepared for accomplishing the presentation shown in Fig. 13.

On the left in Fig. 14 is a block diagram of the display screen; the regions in which a sound source (in this example, a drum and entire room in which this drum is located) is located are shaded. Presentation information I(a) relating to the drum is presented in region T(a), and presentation information I(b) relating to the entire room is presented in region T(b). It should be noted that as used herein, "sound source" is used broadly in reference not only to an object, such as an instrument, that itself produces sound, but also in reference objects that reflect sound, such as the floor, walls, ceiling, and furniture of a room.

As shown on the right in Fig. 14, presentation information I(a) comprises audio data A(a) consisting of the sound of a drum performance, and region data T(a) defining the region in which the sound of the drum performance is presented. On the other hand, presentation information I(b) comprises video data V(b) consisting of an image of the room (including the drum) in which the drum is located, audio data A(b) consisting of the sound reflection of the drum from the entire room, and region data T(b) defining the region in which these are presented.

More specifically, region data T(a) is the bit sequence "1011" defining the sound reproduction region T(a) relating to presentation information I(a). In addition, region data T(b) comprises the bit sequence "10" defining the video reproduction region and sound reproduction region T(b) relating to presentation information I(b).

It should be noted that video data V(a) for showing an image of the drum itself is not contained in presentation information I(a). This is because part of the video data V(b) showing the room in which the drum is located and contained in presentation information I(b) can be used as video data V(a) showing an image of the drum itself. It will also be obvious that video data V(a) showing an image of the drum itself can be separately included in presentation information I(a) as may be necessary.

It should be noted here that region T(b) defined as bit sequence "10" contains region T(a) defined by the bit sequence "1011". If region T(b) is called as a high level region and region T(a) as a low level region, regions are defined with a hierarchical structure. The drum is present as a low level region sound source in the low level region T(a), and the entire room is present as a high level region sound source in the high level region T(b). The high level region sound source is thus a sound source containing the low level region sound source, and while audio data A(a) records only the pure sound of the drum performance as a low level region sound source, audio data A(b) contains both sound directly from the drum and the indirect sound reflection of the drum reflected off the floor, walls, and ceiling of the room, for example.

Two types of audio data A(a) and A(b) with a hierarchical structure can be prepared as follow. First, audio data A(a) associated with the low level is recorded by placing near the drum, that is, near the low level region sound source, a microphone with directivity capable of capturing primarily the sound from the low level region sound source, i.e., the drum. In addition, audio data A(b) associated with the high level is recorded by placing in locations (such as the four corners of the room) suitable for collecting sound sources produced by the room, that is, the high level region sound source, microphones with directivity capable of capturing sound produced by the overall room.

It should be noted that while only one low level region is defined in one high level region in this example, a plurality of low level regions can be defined in one high level region, and the high level region sound source can contain a plurality of low level region sound sources. Furthermore, while only two levels, high and low, are shown in this example, a hierarchical structure with more levels can be alternatively defined.

As described above, by defining a region with a hierarchical structure on the display screen, preparing video data for reproducing a video screen having a low level region sound source presented in a low level region and a high level region sound source containing this low level region sound source in a high level region, and in conjunction therewith preparing audio data for reproducing sound produced by the low level region sound source and sound produced by the high level region sound source, sound for a particular sound source can be reproduced based on the prepared audio data in conjunction with video reproduced according to the prepared video data.

For example, if sound based on audio data A(b) is reproduced while an image based on video data V(b) is reproduced in the bottom left part of the display screen as shown in Fig. 13, a sound image of the sound of the drum reflected by the entire room will be produced in the high level region T(b) in which the image of the overall room is displayed, and an image with rich presence can be achieved.

It is also possible to selectively reproduce only the sound of a particular sound source specified by the audience. For example, if the audience wants to hear only the low level region sound source consisting of the drum, it is possible to reproduce only the sound obtained from audio data A(a) to create a sound image in the low level region T(a) where the image of the drum is displayed.

It will also be obvious that reproduction of video data V(b) can also be changed according to instructions from the audience. For example, it is possible to display only a part of video data V(b) where the drum is displayed while reproducing only sound based on audio data A(a), and display the entire image of video data V(b) while reproducing sound based on audio data A(b).

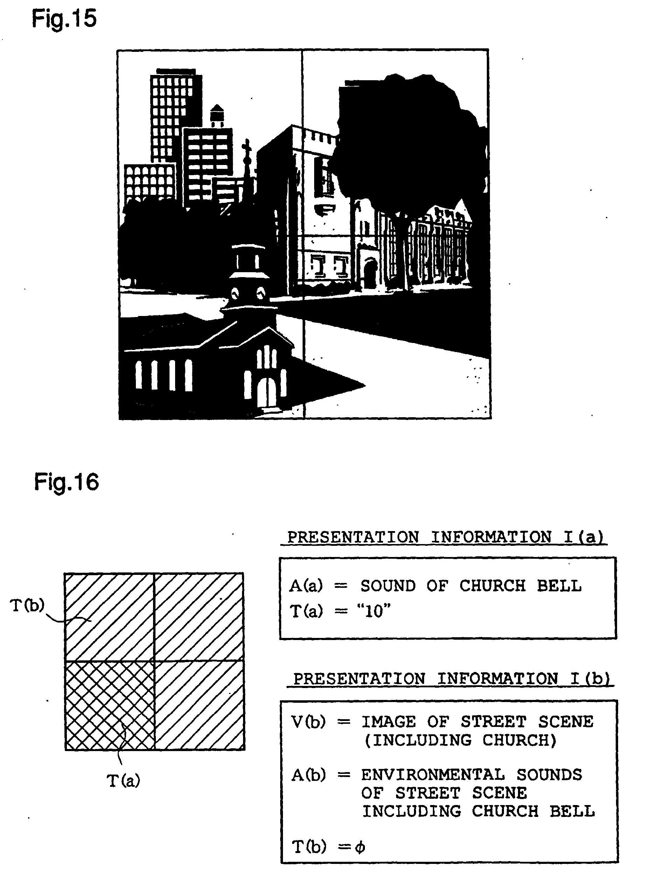

Fig. 15 is a plan view showing another case in which two sets of sound sources with a hierarchical structure are presented in a same screen by means of a method according to the present invention. In this example the display screen is divided into four parts, and a street scene is depicted (the block lines can be displayed as needed, or not displayed). Two sets of sound sources with a hierarchical structure are defined in this scene. The low level region sound source is the church shown in the bottom left part of the figure, and the church bell is the primary sound source. The high level region sound source is the overall street scene including the church. Fig. 16 shows the presentation information to be prepared for accomplishing this presentation.

On the left in Fig. 16 is a block diagram of the display screen in which the regions containing a sound source (in this example, the church and the street scene where the church is located) are shaded. Presentation information I(a) relating to the church is presented in region T(a), and presentation information I(b) relating to the street scene is presented in region T(b).

As shown on the right in Fig. 16, presentation information I(a) comprises audio data A(a) consisting of the sound of the church bell, and region data T(a) defining the region in which sound relating to the church is presented. On the other hand, presentation information I(b) comprises video data V(b) consisting of an image of the street scene, including the church, audio data A(b) consisting of environmental sounds of the street around the church including the sound of the church bell, and region data T(b) defining the region in which these are presented.

More specifically, region data T(a) is the bit sequence "10" defining the sound reproduction region T(a) relating to presentation information I(a). Region data T(b) is null data containing no bits, thereby defining the entire display screen as the video reproduction region and sound reproduction region T(b) relating to presentation information I(b). In this example the high level region sound source is a sound source including the low level region sound source. Audio data A(a) records only the sound of the church bell as the low level region sound source, and audio data A(b) contains various street sounds, including footsteps, in conjunction with the sound of the church bell.

Two types of audio data A(a) and A(b) with a hierarchical structure can be prepared as follow. First, audio data A(a) associated with the low level is recorded by placing near the church a directional microphone capable of capturing primarily the sound from the church bell. In order to prepare sound arising from the entire street, that is, the high level region sound source, high level audio data A(b) can be recorded by, for example, placing microphones with specific suitable directional characteristics on the right and left sides of the camera to simultaneously record street sounds in stereo while recording an image of the street scene. Four channel audio data can also be captured by alternatively recording with microphones having specific directional characteristics placed at four points, top/bottom and right/left sides, of the camera.

Once the necessary presentation information is thus prepared, sound based on audio data A(b) is reproduced while displaying an image based on video data V(b) on the screen as shown in Fig. 15. Therefore, a sound image of environmental sounds collected from the overall street scene can be generated in high level region T(b) where the street scene image is displayed.

It is also possible to selectively reproduce only the sound of a particular sound source specified by the audience. For example, if the audience wants to hear only the low level region sound source from the church, this can be achieved by reproducing only the sound from audio data A(a) to produce a sound image in the low level region T(a) where the image of the church is displayed.

It will also be obvious that reproduction of video data V(b) can also be changed according to instructions from the audience. For example, while reproducing only sound based on audio data A(a), that part of video data V(b) where the church is located could be displayed enlarged.

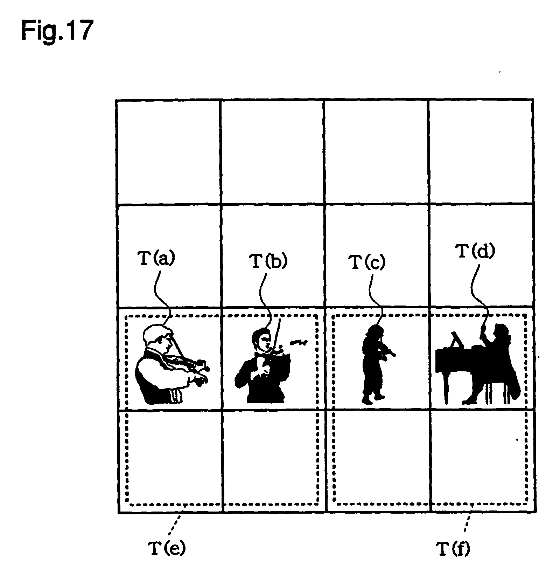

Fig. 17 is a plan view showing a case in which six sets of sound sources with a hierarchical structure are presented in a same screen by means of a method according to the present invention. In this example the display screen is segmented into 16 parts (the block lines can be displayed as needed, or not displayed), with four performers displayed as the low level region sound sources respectively in the four regions T(a), T(b), T(c), T(d). In addition, a high level region T(e) containing region T(a) and T(b) as low level regions, and a high level region T(f) containing region T(c) and T(d) as low level regions, are also defined as shown by the dotted line in the figures. In this example the four performers each form a low level region sound source. In addition, the two performers displayed in region T(a) and T(b) together form one high level region sound source, and the two performers displayed in region T(c) and T(d) together form one high level region sound source.

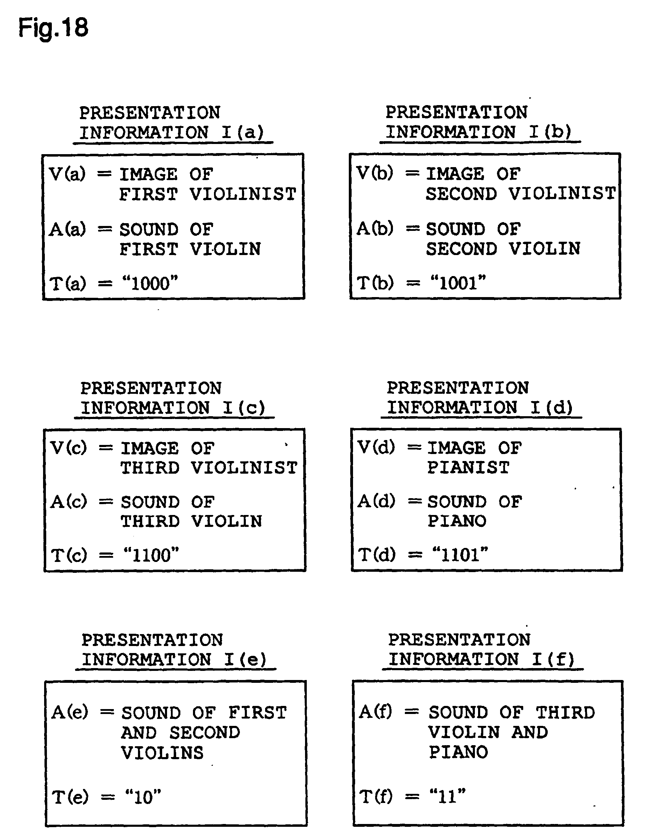

Fig. 18 shows the presentation information to be prepared for accomplishing this presentation. In this case, presentation information I(a) comprises video data V(a) for an image of a first violinist, audio data A(a) for the performance of the first violin, and the bit sequence "1000" as region data T(a) defining the presentation area for these. Presentation information I(b) to I(d) similarly comprise the information to be presented in region T(b) to T(d) and data defining the presentation areas. Presentation information I(e) comprises audio data A(e) containing the performance of the first and second violins, and the bit sequence "10" as region data T(e) defining the corresponding presentation area. Presentation information I(f) comprises audio data A(f) containing the performance of the third violin and piano, and the bit sequence "11" as region data T(f) defining the corresponding presentation area. It should be noted that presentation information I(e) and I(f) do not contain any video data because the video data from the lower level presentation information can be used.

The low level audio data A(a) to A(d) can be prepared by recording with a microphone having directivity capable of directly capturing only the sound of each instrument placed near each instrument, or attached to the clothing of the performer. The high level region sound source is defined as the sound of the instruments played by two performers together with reflections from the surrounding floor, walls, and other objects. A high level region sound source such as audio data A(e) can be prepared by placing in front of and slightly separated from the two performers a microphone with directivity capable of gathering sounds including sound reflections.

Once the presentation information as shown in Fig. 18 is prepared, four instrumental performances can be presented to the audience in a desired way. For example, the standard presentation as shown in Fig. 17 can be achieved by selectively presenting sound of a sound source or sound sources which is/are the highest hierarchy level currently displayed in entirety. More specifically, this presentation can be achieved by reproducing sound from audio data A(e) and A(f) to create a sound image in high level regions T(e) and T(f).

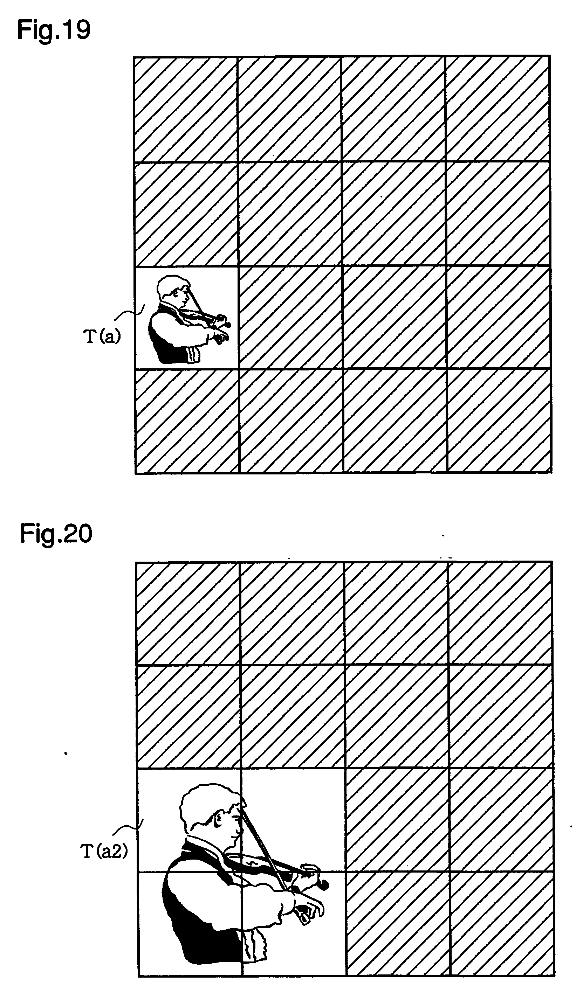

It is, of course, possible to selectively reproduce sound for only a particular sound source specified by the audience. For example, the audience could use a mouse or other pointing device to click on region T(a) in Fig. 17 to indicate a selection of presentation information I(a). If only the selected presentation information I(a) is to be presented as in this example, only an image of the first violinist based on video data V(a) is displayed in region T(a) as shown in Fig. 19, and only the sound of the first violin performance based on audio data A(a) is reproduced to produce a sound image in this region T(a). This type of selective presentation can be used when, for example, the audience wants to hear only the sound of a particular instrument. It should be noted that while only the image from the selected presentation information I(a) is shown displayed in Fig. 19, it is alternatively possible to present the video for presentation information not selected by the audience with lower luminance (that is, a dimmed display).

As noted above, information indicative of the playback volume of each sound source is included in the audio data. In the example shown in Fig. 19, therefore, the first violin performance will be reproduced at the volume determined by the volume information in audio data A(a), and the overall volume will drop compared with when audio data for all four performances is reproduced as in Fig. 17, although the volume of the first violin performance itself does not change. The area in which the image is actually displayed will also be 1/16 of the total display screen. It is therefore preferable to provide a function for enlarging both image and sound. For example, a function for enlarging the display shown in Fig. 19 to one as shown in Fig. 20 in response to an enlarge request from the audience could be provided. In this case it is preferable to increase the volume based on the enlargement size (ratio) of the image. In the example shown in the figures, the image of the first violinist is enlarged four times, and the volume of the first violin performance is therefore also preferably increased four times. (It should be noted that it is not always necessary to physically increase the volume four times, but only so that the volume is perceived to increase four times.)

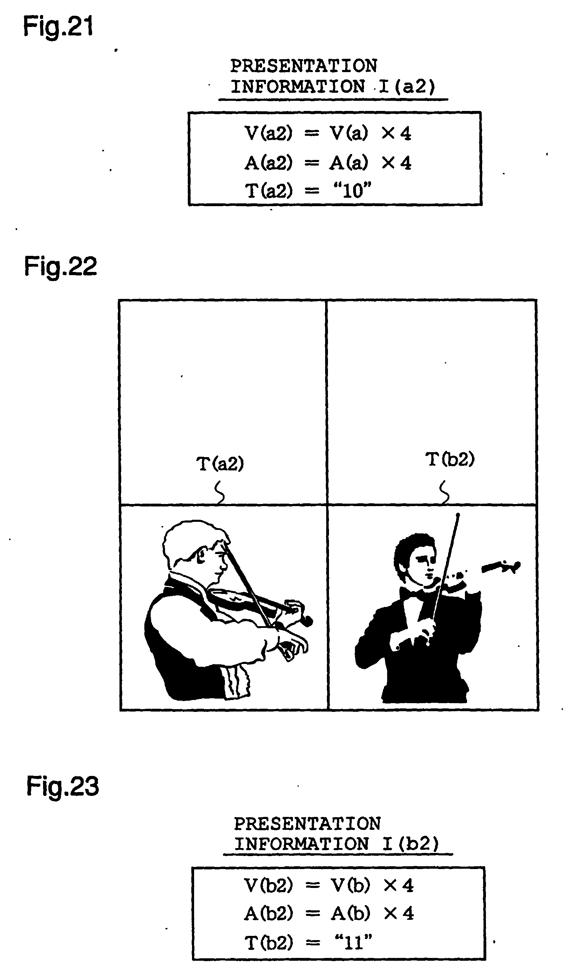

The presentation shown in Fig. 19 can be changed to that shown in Fig. 20 by modifying the presentation information I(a) shown in Fig. 18 to generate presentation information I(a2) as shown in Fig. 21. This presentation information I(a2) comprises video data V(a2) whereby the image size of video data V(a) is enlarged four times, audio data A(a2) whereby the volume of audio data A(a) is perceptually amplified four times, and region data T(a2) as the bit sequence "10" whereby the area of region data T(a) is enlarged four times.

Fig. 22 is a plan view showing the presentation when a command is applied for enlarging region T(a) in Fig. 17 together with the image in the adjacent region four times. As with the example shown in Fig. 20, the image of the first violinist is displayed enlarged four times in region T(a2). In the example shown in Fig. 22, the image of the second violinist is also displayed enlarged four times in region T(b2) adjacent thereto on the right. This presentation can be achieved by changing the presentation information I(a) as shown in Fig. 21, and additionally changing presentation information I(b) in the same way to obtain presentation information I(b2) as shown in Fig. 23. The changed presentation information I(b2) comprises video data V(b2) whereby the image size of video data V(b) is enlarged four times, audio data A(b2) whereby the volume of audio data A(b) is perceptually amplified four times, and region data T(b2) as the bit sequence "11" whereby the area of region data T(b) is enlarged four times.

In the presentation shown in Fig. 22 the reproduced audio data is only audio data A(a2) and A(b2), and this audio data is reproduced to form a sound image in region T(a2) and T(b2), respectively. The volume of the reproduced audio data is also perceptually four times the original volume. It is therefore possible to present sound constantly harmonized with the video. For example, if the audience changes a video shown in Fig. 17 to a video shown in Fig. 22, the audio is also changed with harmony. In other words, with a presentation as shown in Fig. 22, the performance of the first violinist can be heard from the bottom left of the display screen, the performance of the second violinist can be heard from the bottom right of the display screen, the volume is adjusted to a level commensurate to the size of the image, and audio and video can be presented naturally without a sense of disharmony.

While an example of presentations achieved when a command for enlarging the display is applied is described above, an equivalent process can be applied when a command to reduce the display is asserted. In this case the image is displayed reduced, the volume is lowered, and the presentation area of the audio and video is also changed.

In the above described examples only sound from the sound sources displayed on the screen is presented, but there are also cases in which sound from a sound source not displayed is desirably heard. For example, in the case shown in Fig. 20, the audience may request to listen primarily to the sound of the first violin with simultaneously listening to the sound of the second violin, third violin, and piano at a lower volume, so as to get a feeling for the overall performance. Requests of this type can be accommodated by providing a function for setting the playback volume of individual sound sources (irrespective of whether currently displayed) to a desired level based on an instruction from the audience, and reproducing sound for a sound source for which the volume has been set at the volume setting. For example, when the display is as shown in Fig. 20, only the sound of the first violin is normally presented at a volume commensurate to region T(a2). However, if the playback volume of the second violin, third violin, and piano has been set by the audience, these instruments are also presented at the set volume.

It should be noted that when sound relating to a sound source not displayed on screen is presented, it can be reproduced to make a sound image covering the entire screen, for example. It will also be obvious that with a display as shown in Fig. 17, it is also possible to increase the volume of only the first violin, for example.

### 〈5〉 Presentation using a sound source definition with a hierarchical structure (2)

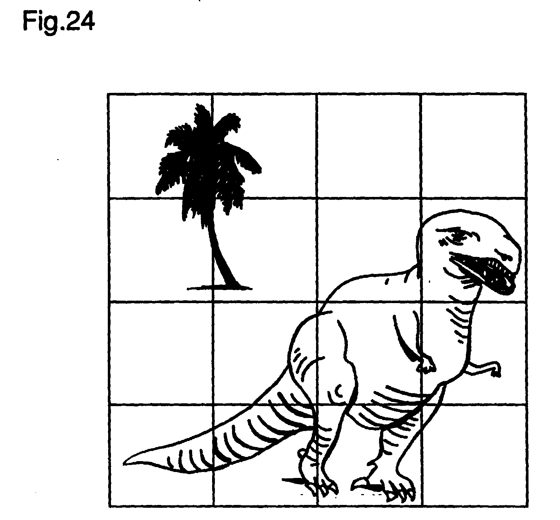

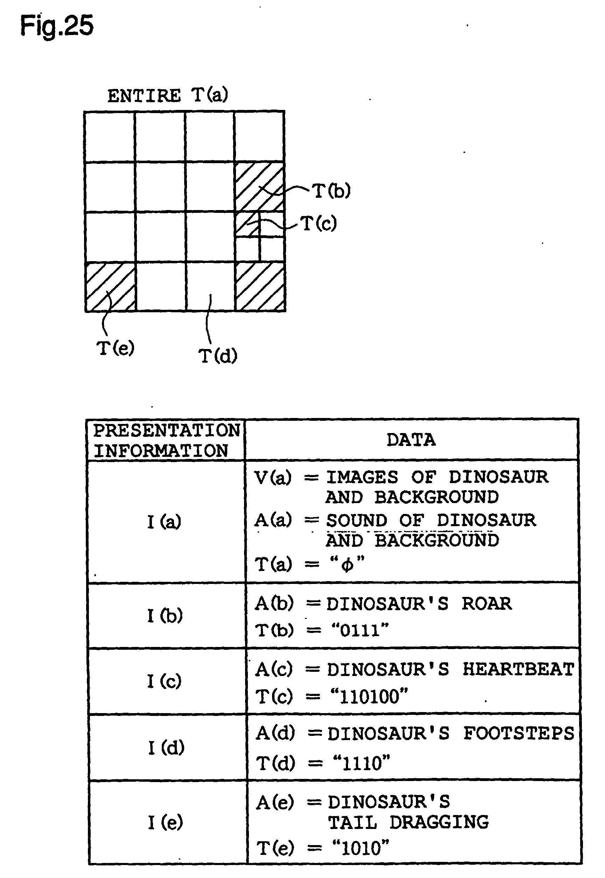

A further embodiment whereby a sound source is defined with a hierarchical structure is described next below. Fig. 24 is a plan view showing a picture of a dinosaur (either a moving picture or still picture) for educational purposes presented in conjunction with sound. It should be noted that for convenience of description a number of screen division lines are shown in the figure, but it is not necessary to show these lines in the actual display. As shown on the left in Fig. 25, regions T(a) to T(e) are defined in this display screen. Audio and video based on presentation information I(a) to I(e) shown on the right in Fig. 25 is presented in these areas.

Region T(a) is a high level region equivalent to the entire display screen, and contains therein low level regions T(b) to T(e). Low level regions T(b) to T(e) show specific parts of the dinosaur. More specifically, region T(b) shows the dinosaur's head, region T(c) shows the dinosaur's breast, region T(d) shows the dinosaur's legs, and region T(e) shows the dinosaur's tail; each of these parts functions as an independent sound source. Presentation information I(b) to I(e) each comprise audio data A(b) to A(e) for presenting the sound produced by the corresponding sound source, and region data T(b) to T(e) defining the respective area of each part. For example, audio data A(b) is data for the dinosaur's roar, audio data A(c) is data for the dinosaur's heartbeat, audio data A(d) is data for the dinosaur's footsteps, and audio data A(e) is data for the sound of the dinosaur's tail dragging.

Presentation information I(a) comprises video data V(a) containing images of the dinosaur and the background, audio data A(a) for presenting sounds produced by high level region sound sources, including all of the above-noted low level region sound sources (specifically, all sounds produced by the dinosaur, and, background sounds such as produced by the tree in the background), and region data T(a) indicative of an area equivalent to the entire display screen. It should be noted that because dinosaurs are not currently extant, it is not possible to prepare the audio data by actually recording the sounds produced by a real dinosaur. Therefore, this audio data is prepared using a synthesizer or other synthetic technique.

By preparing presentation information as shown in Fig. 25, audio and video information relating to the dinosaur can be presented in various combinations as desired by the audience. For example, an initial presentation as shown in Fig. 24 can be achieved by selecting from all presentation information shown in Fig. 25 the audio data A(a) relating to the highest level sound source whose entire image is displayed, and reproducing this audio data over the entire screen area. Only the sound from a particular sound source specified by the audience is then reproduced as needed. For example, if the audience clicks the area around the dinosaur's head using a mouse or other pointing device, thereby indicating a desire to select presentation information I(b), only the sound based on audio data A(b) is reproduced to create a sound image in region T(b). In this case, only the sound of the dinosaur's roar is presented to the audience. As described above, it is also possible to change the volume according to the enlargement/reduction ratio if a function is provided enabling the audience to enlarge or reduce the display of a particular part of the image.

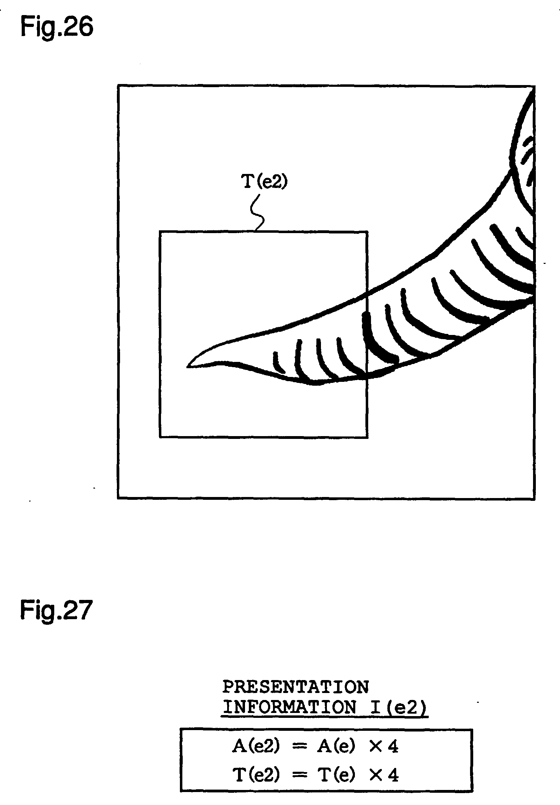

For example, Fig. 26 shows the tail part of the dinosaur displayed enlarged four times centered on the part in region T(e). When the presentation is thus changed, the presentation information I(e) shown in Fig. 25 is modified as shown in Fig. 27. That is, audio data A(e) for the sound of the dinosaur's tail dragging is changed to audio data A(e2) whereby the volume is perceptually increased four times, and region data T(e) defining the sound reproduction region is increased four times to region data T(e2). As a result, a tail dragging sound at four times the volume is presented to produce a sound image in an area enlarged four times.

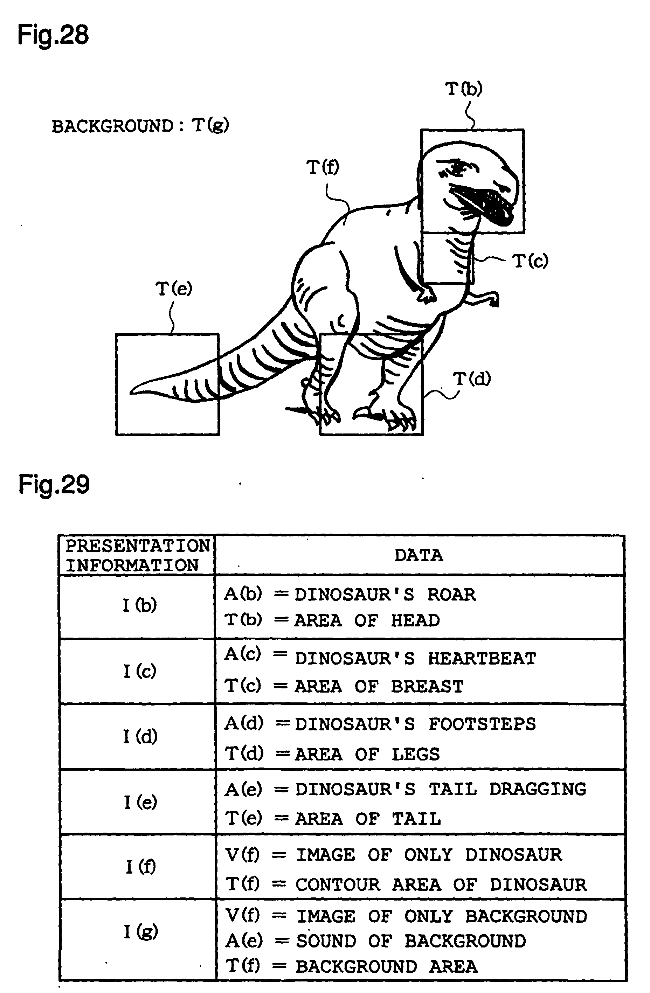

It should be noted that while the location of each sound source is defined as a particular block segment of the display screen in the example shown in Fig. 24, it is necessary to define the location of each sound source as an area in the video data, and not a region of the display screen, as shown in Fig. 28 when the dinosaur is presented as a moving image. More specifically, each presentation region is defined related to particular video data. For example, region T(b) is defined as the dinosaur's head in the video data, region T(c) as the dinosaur's breast, region T(d) as the legs, region T(e) as the tail, and region T(g) as the background. In this case, the presentation information is as shown by presentation information I(b) to I(g) in Fig. 29. By thus defining the location of a sound source as an area in the video data, the area of a sound source can be defined irrespective of an absolute location on the display screen, and the dinosaur can be presented without impediment as a moving picture.

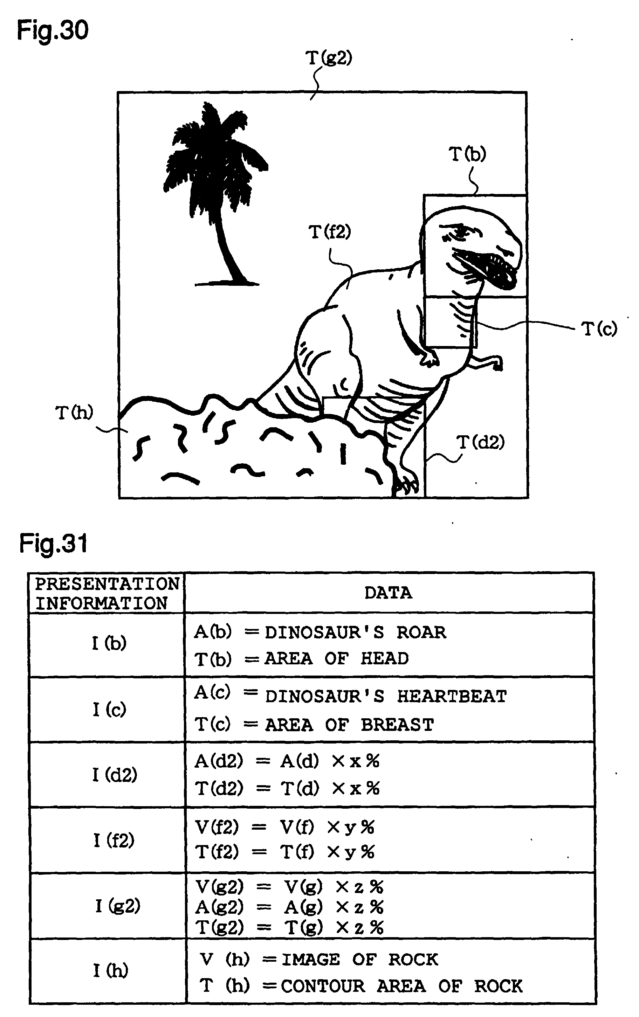

When the dinosaur is thus presented as a moving picture, part of the dinosaur image might become hidden by a rock, for example, as shown in Fig. 30. In this example, 100% of the dinosaur's tail region T(e) is hidden by the rock displayed in region T(h), as are part of the dinosaur's leg region T(d), part of the dinosaur's contour region T(f), and part of the background region T(g).

In such a case it is desirable to lower the reproduced volume commensurately to the area of the hidden part of the image. For example, because the dinosaur's tail region T(e) is hidden 100%, the volume of sound based on audio data A(e) is lowered 100% during reproduction so that the tail dragging sound cannot be heard at all. In addition, the leg region T(d), contour region T(f), and background region T(g) are respectively lowered x%, y%, and z% so that in the new region T(d2), region T(f2), and region T(g2), the presentation information shown in Fig. 29 is modified as shown in Fig. 31. The area of the regions defined by the region data is reduced only by the amount that is hidden, and the volume defined by the audio data is simultaneously reduced only by the amount that is hidden.

In other words, when a plurality of sets of presentation information with overlapping region data are simultaneously presented, it is only necessary to prioritize the plural presentation information, reproduce only video for the presentation information with the highest priority in parts where an overlap occurs while hiding the video for presentation information with low priority, and when reproducing sound from the presentation information, lower the volume an amount corresponding to the area of the image that is hidden.

### 〈6〉 Method for forming a sound image in a particular region

As described above, audio data A must be reproduced in order to form a sound image in a particular region defined by region data T to achieve the present invention. A specific method for forming a sound image in a particular region on screen is described next below.

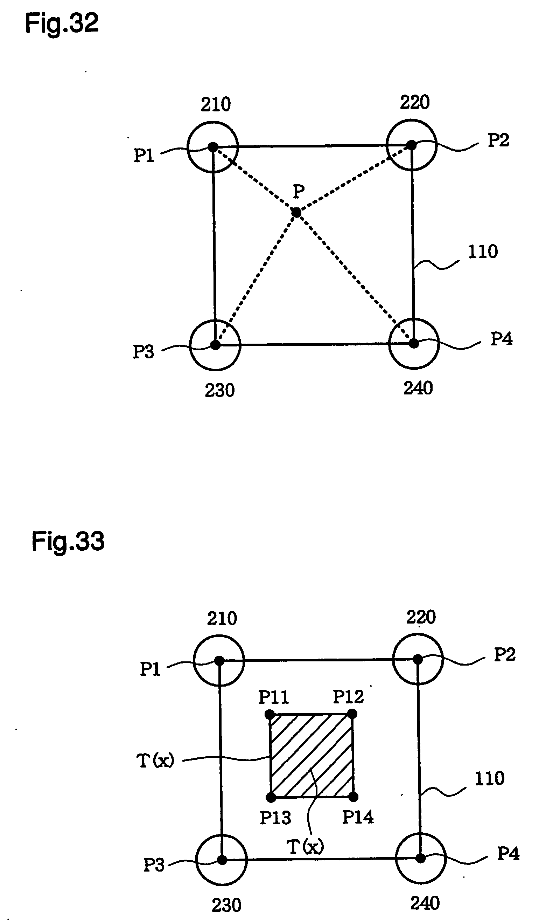

Fig. 32 is a front view showing the relative positions of a sound source and display screen in a device for presenting audio and video according to the present invention. This device uses a display means having a square display screen 110 with four sound sources 210 to 240 (speakers) placed at positions P1 to P4 at approximately the four corners of the screen 110. By presenting an acoustic signal using four sound sources located at the four corners of the screen 110, a sound image can be formed at a desired position P on screen 110. The sound image position P can be set freely by controlling the volume of each sound source.

For example, if a sound based on the same acoustic signal is reproduced at the same volume from all four sound sources, a sound image will be formed in the center of screen 110. If the volume of the left sound sources 210 and 230 is increased from this neutral position, the sound image will move to the left. Conversely, if the volume of the right sound sources 220 and 240 is increased, the sound image moves to the right. If the volume of the top sound sources 210 and 220 is increased from this neutral position, the sound image will move up, and conversely if the volume of the bottom sound sources 230 and 240 is increased from this neutral position, the sound image will move down. As a result, to form a sound image at a desired position P, it is only necessary to determine the distance from this position P to the four corner positions P1 to P4, and control the volume of the sound sources 210 to 240 according to this distance.

It should be noted that the sound image position can be controlled to a certain extent using two sound sources instead of these four sound sources. For example, using a pair of sound sources on right and left sides, the sound image position can be controlled in the right and left directions; using a pair of sound sources at top and bottom, the sound image position can be controlled up and down. Therefore, the effect of the present invention can be achieved to a certain degree even using only two sound sources. However, four sound sources at the four corners of the screen 110 are preferably used as described above because of the ability to more effectively control the sound image position.

It should be further noted that while a square screen 110 is used in the example shown in the figure, a rectangular display screen can, of course, be used with no problem. Furthermore, while the four sound sources are theoretically ideally placed at the four corners of the screen 110, the sound placement capacity of human hearing is not particularly accurate, and in practice it is therefore not always necessary to place the sound sources in the four corners of the screen 110.

Referring again to Fig. 32, a sound image can be formed in a desired position P by controlling the volume of the sound sources using four sound sources 210 to 240 placed in the four corners of the screen 110, but the sound image thus formed is supplied as a sound point. In contrast to this the sound image required to achieve the present invention is a sound image that appears as a distributed surface in a particular region. To achieve this, a method for forming a sound image as a surface to a desired rectangular region T(x) on the screen 110 using four sound sources 210 to 240 as shown in Fig. 33 is described next below.

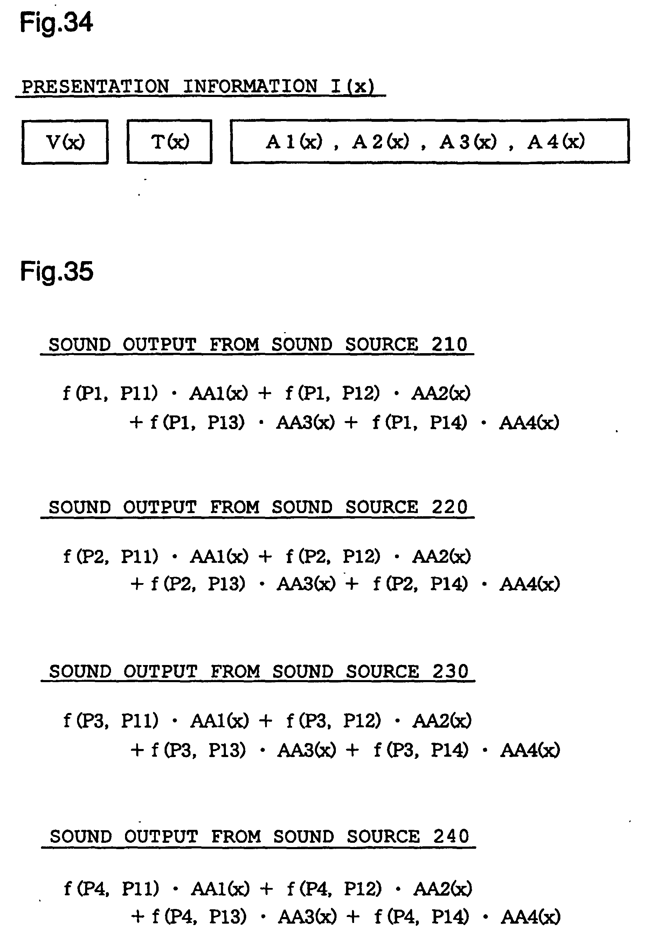

We first consider a case in which presentation information I(x) as shown in Fig. 34 is provided. This presentation information I(x) comprises video data V(x), region data T(x), and four channel audio data A1(x) to A4(x). Region data T(x) defines region T(x) shown in Fig. 33, and functions as the video reproduction region and sound reproduction region. This means that video data V(x) is reproduced in region T(x), and sound based on the four channel audio data A1(x) to A4(x) is reproduced so that a sound image is formed in region T(x).

Presentation of sound based on this presentation information I(x) is accomplished by the method described below. First, representative positions P11 to P14 are set at the four corners of region T(x) defined as a rectangular region. The four channel audio data A1(x) to A4(x) corresponds to these four representative positions. More specifically, audio data A1(x) corresponds to representative position P11, audio data A2(x) to representative position P12, audio data A3(x) to representative position P13, and audio data A4(x) to representative position P14. In general, four channel audio data is obtained by recording with four microphones positioned in front, behind, right, and left of the particular sound source. Therefore, to make particular audio data correspond to a particular position in the present invention, the location of the microphones used for recording the audio data are preferably matched to the location of the corresponding position.

Next, the distances between each sound source position P1 to P4 and each representative position P11 to P14 are calculated, and the four channel audio data A1(x) to A4(x) is reproduced to achieve a sound image of audio data corresponding to the location of each representative position P11 to P14 by controlling the volume based on the calculated distances. For example, by supplying an acoustic signal based on audio data A1(x) to each sound source 210 to 240, and appropriately controlling the volume of each sound source, a sound image of first channel audio data A1(x) can be achieved at the location of representative position P11 as described with reference to Fig. 32. In exactly the same way it is possible to supply an acoustic signal based on audio data A2(x) to each sound source 210 to 240 and control the volume to achieve a sound image of second channel audio data A2(x) at the location of representative position P12; supply an acoustic signal based on audio data A3(x) to each sound source 210 to 240 and control the volume to achieve a sound image of third channel audio data A3(x) at the location of representative position P13; and supply an acoustic signal based on audio data A4(x) to each sound source 210 to 240 and control the volume to achieve a sound image of fourth channel audio data A4(x) at the location of representative position P14.

If an acoustic signal based on the four channel audio data A1(x) to A4(x) is mixed and supplied to sound sources 210 to 240, and the signals are mixed after adjusting the volume of each channel to achieve a sound image at each position as described above, a sound image of sound based on audio data A1(x) is achieved at representative position P11, a sound image of sound based on audio data A2(x) is achieved at representative position P12, a sound image of sound based on audio data A3(x) is achieved at representative position P13, and a sound image of sound based on audio data A4(x) is achieved at representative position P14. A sound image of sound from each channel is thus in principle formed at the four representative positions, but the human ear perceives a sound image with planar expansion through rectangular region T(x) of which the four representative positions P11 to P14 are the corners.

This method can therefore be applied to create a sound image in a desired region of the screen 110. Fig. 35 shows a method for calculating the audio playback signals applied to the sound sources (speakers) 210 to 240 based on the presentation information I(x) shown in Fig. 34. Note that f(Pm, Pn) is defined here as a function determined according to the distance between two points Pm and Pn such that the value increases as the distance between the two points decreases. In addition, AAk(x) indicates the amplitude of the audio data for the k-th channel.

For example, f(P1, P11) is a function determined according to the distance between representative position P11 and position P1, and AA1(x) is the amplitude of the acoustic signal based on audio data A1(x) for the first channel. While sound output from sound source 210 is achieved by mixing the four channel acoustic signals AA1(x) to AA4(x), the function determined according to the distance between each representative position and sound source position is used as a coefficient for multiplication.

It should be noted that the applied audio data is described above assuming a four channel configuration. The same effect can be achieved supplying data for a right and left, two channel (stereo) configuration by letting the left channel audio data correspond to the left two positions P11 and P13 of the four positions P11 to P14 defined at the four corners of the square region T(x) in Fig. 33, and the right channel audio signal correspond to the right two positions P12 and P14. In other words, a sound image reproduced from left channel audio data is formed at positions P11 and P13, and a sound image reproduced from right channel audio data is formed at positions P12 and P14.

If monaural (single channel) audio data is applied, monaural audio data is supplied to the four positions P11 to P14 defined at the corners of the rectangular region T(x) as shown in Fig. 33. In this case a sound image derived from monaural audio data is reproduced at each of the positions P11, P12, P13, and P14. While the original audio data is monaural, formation of a sound image at each of the four representative positions results, overall, in a sound image with a planar distribution throughout rectangular region T(x).

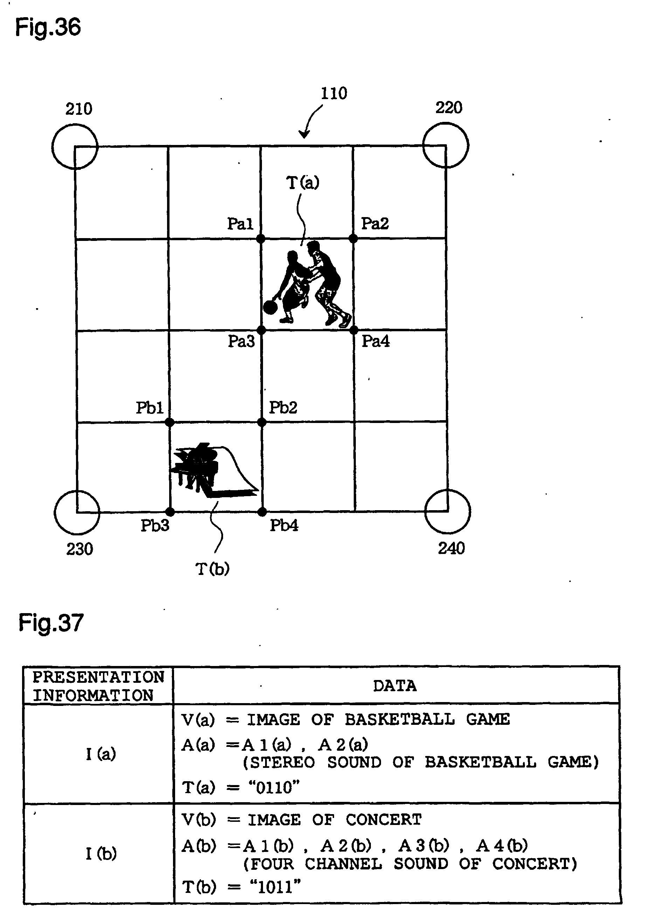

Fig. 36 is a front view showing simultaneous presentation of two sets of presentation information using the device shown in Fig. 32. Fig. 37 shows the presentation information to be prepared for accomplishing the presentation shown in Fig. 36.

The first set of presentation information I(a) relates to a basketball game, and comprises video data V(a) showing an image of the basketball game, two channel audio data A(a) (=A1(a) and A2(a)) providing stereo audio from the basketball game, and region data T(a) (= 0110) defining the video reproduction region and sound reproduction region. The second set of presentation information I(b) relates to a concert, and comprises video data V(b) showing an image of the concert, four channel audio data A(b) (=A1(b) to A4(b)) providing four channel audio from the concert, and region data T(b) (= 1011) defining the video reproduction region and sound reproduction region.

As shown in Fig. 36, an image based on video data V(a) is presented in region T(a) on screen 110, and an image based on video data V(b) is presented in region T(b). Regarding the presented sound, a sound image of sound reproduced from audio data A(a) is formed in region T(a), and a sound image of sound reproduced from audio data A(b) is formed in region T(b). When audio data is thus prepared for reproduction in different sound reproduction regions, audio reproduction from each sound source (speaker) can be controlled so that sound images based on different audio data are superimposed on each other.

More specifically, the volume of sound sources 210 to 240 is controlled so that a sound image of sound based on audio data A1(a) is formed at positions Pa1 and Pa3 in Fig. 36, a sound image of sound based on audio data A2(a) is formed at positions Pa2 and Pa4, a sound image of sound based on audio data A1(b) is formed at position Pb1, a sound image of sound based on audio data A2(b) is formed at position Pb2, a sound image of sound based on audio data A3(b) is formed at position Pb3, and a sound image of sound based on audio data A4(b) is formed at position Pb4.

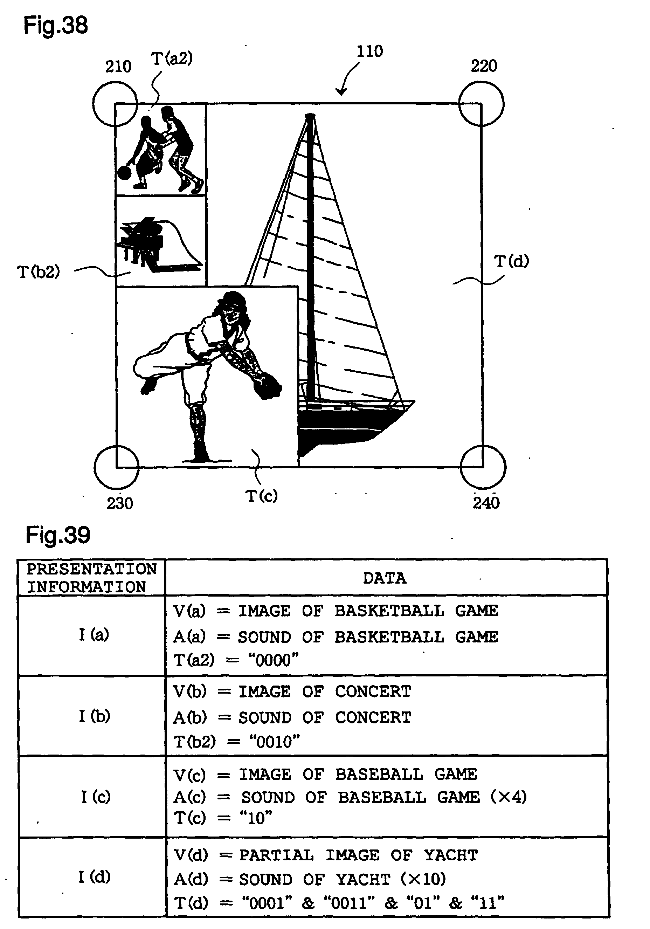

It should be noted that in this preferred embodiment the location where the presentation information is presented and the presentation size can be changed as desired based on audience instruction. For example, Fig. 38 is a front view showing the presentation of presentation information I(a) and I(b) moved from the location in Fig. 36 to region T(a2) and T(b2), and new presentation information I(c) and I(d) presented. Fig. 39 shows the presentation information to be prepared to accomplish the presentation shown in Fig. 38. Note that the region data of presentation information I(a) and I(b) is modified to T(a2) and T(b2), respectively.

The new third presentation information I(c) relates to a baseball game, and comprises video data V(c) showing an image of the baseball game, audio data A(c) providing audio from the baseball game, and region data T(c) (= 10) defining the video reproduction region and sound reproduction region. Furthermore, the fourth presentation information I(d) relates to a yacht, and comprises video data showing a picture of the yacht, audio data providing sound from the yacht, and region data T(d) (= 0001, 0011, 01, 11) defining the video reproduction region and sound reproduction region.

It should be noted that in the embodiment shown here the volume used for reproducing audio data from the presentation information is a reference volume, that is, a volume when an image is supposed to be reproduced in a reference area equivalent to 1/16 the display screen 110. Therefore, when the image is displayed enlarged or reduced, the volume is increased or decreased according to the display size. In the example shown in Fig. 38, the sound of the basketball game and the concert displayed in region T(a2) and T(b2) at the reference area is reproduced at the reference volume, but the sound of the baseball game displayed in region T(c) four times larger is reproduced at four times the reference volume, and the sound of the yacht displayed in region data T(d) ten times larger is reproduced at ten times the reference volume. (The basic image of the yacht is displayed in an area twelve times the reference area, but part of the image is hidden by the baseball image, and the actual display area is thus ten times the reference area.)

Considering the performance of human hearing, it is difficult to distinguish sounds relating to the four different presentation information shown in Fig. 38. Therefore, in practice, it is preferably to reproduce only the sound of the yacht occupying the greatest display area, or reproduce only the sounds for presentation information to the first and second largest display areas (that is, sounds relating to the yacht and sounds relating to baseball in this example).

### 〈7〉 An actual configuration of video data and audio data

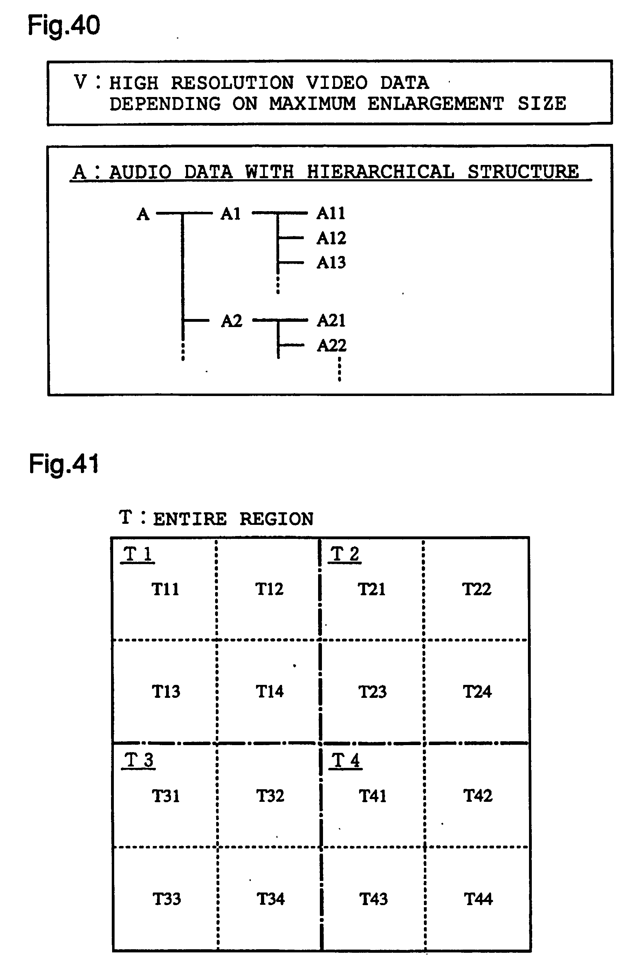

Fig. 40 shows a practicable configuration of video data and audio data to be prepared for accomplishing the audio and video presentation method according to the present invention. First, high resolution video data is prepared for the maximum enlargement size as video data V. That is, high resolution video data enabling good image quality at the greatest possible enlargement size is prepared. For example, if an image showing all members of an orchestra is prepared as video data V, and if an enlarged image of a string of a violin can be presented when the image is displayed at the maximum enlargement size, then high resolution video data enabling each violin string to be reproduced with good quality is prepared.

Data with a hierarchical structure is prepared for the audio data A. In the example shown in the figure, first level audio data A contains second level audio data A1 and A2, second level audio data A1 contains third level audio data A11, A12, A13, and so forth and second level audio data A2 contains third level audio data A21, A22, and so forth.

If an image of an orchestra is prepared as the video data, for example, the first level audio data A could be data recording a performance of the entire orchestra, second level audio data A1 could be a recording of a performance by all first violins, and third level audio data A11 could be data recording a performance by one particular first violinist. If an even more detailed hierarchical structure is defined, it would even be possible to prepare audio data recording only the sound of the vibrations of one string of the violin used by a particular member.

Fig. 41 shows an exemplary definition of regions with a hierarchical structure. In this example first level region T contains second level regions T1, T2, and so forth indicated by the dot-dash lines, and the second level regions contain third level regions such as T11, T12, T13, and so forth indicated by the dotted lines. Using the above-noted example of an orchestra, the first level region T would correspond to the image of the entire orchestra, for example, second level region T1 would be a region corresponding to an image of all first violins, and third level region T11 would be a region corresponding to an image of a particular member of the first violins. If regions with even greater detail are defined, it is possible to define a region corresponding to an image of the first string of a violin used by a particular member, for example. It should be noted that while each of the regions is here defined as a square region, regions can be defined with any desired shape as needed.

Presentation information with a configuration thus defined can be used as a type of database. For example, if the audience wants to learn about the orchestra overall, a command for displaying an image of the overall orchestra corresponding to first level region T could be applied and audio data for the overall orchestra reproduced. To learn about the first violins, a command for displaying only the first violins corresponding to the second level region T1 is applied and audio data for the first violins is reproduced. In this case the image in region T1 is preferably enlarged to the size of the entire display screen.

It should be noted that when it is possible to enlarge or reduce the displayed image as desired, sound relating to the highest level sound source currently displayed in entirety is preferably selectively reproduced. For example, if the audience applies an instruction to display an image of the entire orchestra to the full screen, only the sound of the entire orchestra, that is, the sound source at the highest level displayed, is selectively reproduced; if a command displaying an image of only the first violins to the entire screen is applied, only the sound of the first violins, that is, the sound source currently displayed in entirety at the highest level, is selectively reproduced. More specifically, when a audience selects video data, corresponding audio data is automatically selected. This type of function is important for improving operability when a device according to the present invention is used as a means for scanning a database.

High speed data transfer technologies have developed in recent years, making it possible to transfer quite large volumes of data in a relatively short time. Therefore, if presentation information with the above-described hierarchical structure is stored in a computer located in an art museum or history museum, for example, so that the required data can be transferred as necessary, use as a database is possible. In the case shown above, for example, if the audience requests intonation relating to the entire orchestra, only data required to present the first level of information need to be transferred. If more detailed information for a lower level is requested, data required to present information for the requested layer can be transferred again.

DVD and other high capacity storage media have become available in the last few years, and by constructing the database on such media, it is possible to directly access the database without an intervening network. Furthermore, such a database can be used on the computer so that, for example, the computer could be applied in medical diagnostic technologies by preparing a database of heart sounds collected as audio data with a spatial hierarchical structure. For example, sounds gathered from near a specific valve and sounds recorded for the entire heart could be assembled in a hierarchical structure with the former being a low level region sound source and the latter a high level region sound source.

### 〈8〉 Configuration of a device for presenting audio and video according to the present invention

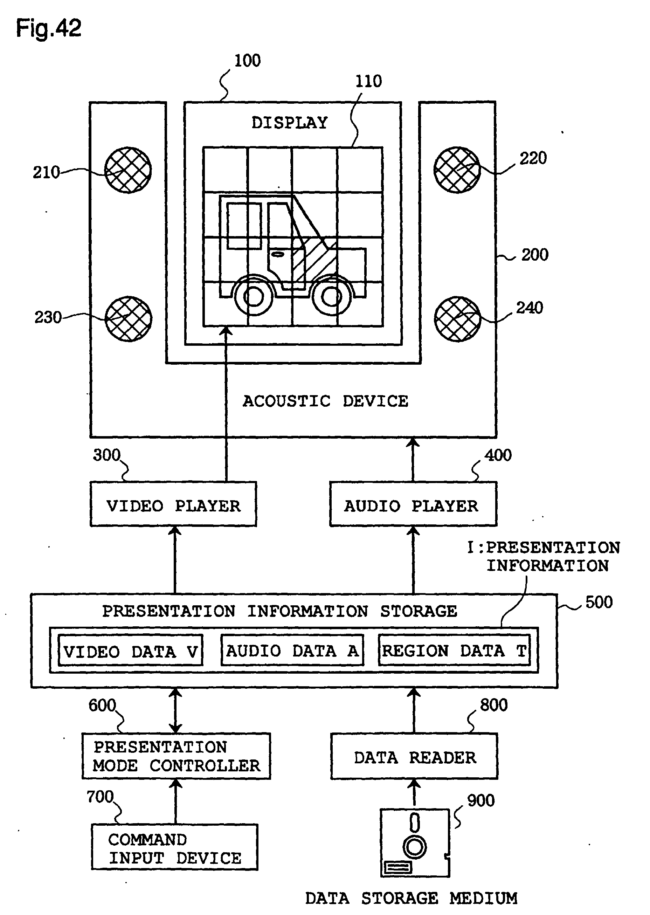

Last, the structure of a device according to the present invention is described briefly. Fig. 42 is a block diagram showing the basic configuration of a device for presenting audio and video according to the present invention. As shown in the figure, this device comprises a display 100, acoustic device 200, video player 300, audio player 400, presentation information storage 500, presentation mode controller 600, command input device 700, and data reader 800.

The display 100 is a display device having a screen 110 for presenting images, and is, for example, typically a large-screen display device having a plurality of light-emitting diodes arranged in a matrix pattern.

The acoustic device 200 has a plurality of sound sources 210 to 240 placed around the screen 110 so that sound can be presented with a sound image formed in a desired region of the screen 110. More specifically, the acoustic device 200 is a speaker system positioned around the screen 110.

The presentation information storage 500 is a device for storing the presentation information I comprising video data V for the image to be presented, audio data A for the sound to be presented, and region data T defining the video reproduction region in which the video data V is presented and the sound reproduction region in which the audio data A is presented, and in practice is memory or an external storage device for a computer.

The video player 300 has a function for reproducing images based on video data V in the video reproduction region. The audio player 400 has a function for reproducing sound based on audio data A using the plural sound sources 210 to 240 of the acoustic device 200 so that a sound image is formed in the sound reproduction region of the screen 110.

In addition, command input device 700 is a device for inputting operator (audience) commands. Based on the input command, presentation mode controller 600 modifies the presentation information I in presentation information storage 500, and thus functions to change the audio and video presentation. Commands for selecting the audio data to be presented or enlarging the video data display are entered from the command input device 700 and then processed by the presentation mode controller 600 to change the presentation mode.

The data reader 800 reads presentation information I from data storage medium 900, such as CD-ROM or DVD and stores it to the presentation information storage 500, In practice, the presentation information is provided in a form of data storage medium 900.

### Industrial Applicability

A device and method for presenting audio and video according to the present invention can be used widely in fields requiring presentation of video in conjunction with audio, and can be applied to provide multimedia content or a database using a computer.

## Claims

1. A device for presenting audio and video, comprising:
a display device (100) having a display screen (110) for presenting video;
an acoustic device (200) for presenting sound so that a sound image is formed in a desired region of the display screen, and having a plurality of sound sources (210 - 240) positioned around the display screen;
a presentation information storage device (500) for storing presentation information (I) containing video data (V) for an image to be presented, audio data (A) for sound to be presented, and region data (T) indicative of a sound reproduction region for reproducing the audio data;
a video reproducing device (300) for reproducing an image based on the video data in a particular video reproduction region on the display screen; and
an audio reproducing device (400) for reproducing sound based on the audio data using the plurality of sound sources of the acoustic device so that a sound image is formed in the sound reproduction region on the display screen.

2. A device for presenting audio and video as described in claim 1, wherein:
region data (T) is indicative of a sound reproduction region for reproducing audio data, and includes information indicative of a video reproduction region for reproducing video data.

3. A device for presenting audio and video as described in claim 1 or 2, further comprising:
a command input device (700) for entering an operator command; and
a presentation mode controller (600) for modifying presentation information (I) in the presentation information storage device (500) and changing presentation of audio and video based on said command.

4. A device for presenting audio and video as described in any of claims 1 to 3, further comprising:
a data reading device (800) for reading presentation information (I) recorded in a data storage medium (900), and accomplishing a process for storing it in the presentation information storage device (500).

5. A device for presenting audio and video as described in any of claims 1 to 4, wherein:
a display device (100) having a rectangular display screen (110), and an acoustic device (200) having four sound sources (210 - 240) disposed to source positions (P1 - P4) located substantially at four corners of the display screen, are used;
sound reproduction region (T(x)) is defined as a rectangular region, and representative positions (P11 - P14) representing the sound reproduction region are defined at four corner positions of said rectangular region;
four channel acoustic signals correspond respectively to the four representative positions when audio data (A) for reproduction in the sound reproduction region comprises four channel acoustic signals (A1(x) to A4(x)); and
sound is reproduced by the audio reproducing device (400) so that a sound image of a corresponding acoustic signal is achieved at a location of a corresponding representative position by controlling volume according to a distance between said source positions (P1 - P4) and said location.

6. A device for presenting audio and video as described in any of claims 1 to 4, wherein:
a display device (100) having a rectangular display screen (110), and an acoustic device (200) having four sound sources (210 - 240) disposed to source positions (P1 - P4) located substantially at four corners of the display screen, are used;
sound reproduction region (T(x)) is defined as a rectangular region, and representative positionS (P11 - P14) representing the sound reproduction region are defined at four corner positions of this rectangular region;
a left channel acoustic signal corresponds to left two of said four representative positions, and a right channel acoustic signal corresponds to right two of said four representative positions, when audio data (A) to be reproduced in the sound reproduction region is a two-channel stereo acoustic signal; and
sound is reproduced by the audio reproducing device (400) so that a sound image of a corresponding acoustic signal is achieved at a location of a corresponding representative position by controlling volume according to a distance between said source positions (P1 - P4) and said location.

7. A device for presenting audio and video as described in any of claims 1 to 4, wherein:
a display device (100) having a rectangular display screen (110), and an acoustic device (200) having four sound sources (210 - 240) disposed to source positions (P1 - P4) located substantially at four corners of the display screen, are used;
sound reproduction region (T(x)) is defined as a rectangular region, and representative positions (P11 - P14) representing the sound reproduction region are defined at four corner positions of this rectangular region;
a monaural acoustic signal corresponds to each of the four representative positions when audio data (A) to be reproduced in the sound reproduction region is a monaural signal; and
sound is reproduced by the audio reproducing device (400) so that a sound image of a corresponding acoustic signal is achieved at a location of a corresponding representative position by controlling volume according to a distance between said source positions (P1 - P4) and said location.

8. A device for presenting audio and video as described in any of claims 1 to 7, wherein:
sound is reproduced by the audio reproducing device (400) to achieve a superimposed sound image based on the audio data when a plurality of audio data for reproduction in different sound reproduction regions is prepared.

9. A device for presenting audio and video as described in any of claims 1 to 7, wherein:
the device comprises a function to simultaneously present plural sets of presentation information having mutually overlapping region data,
an order of priority is defined for the plural sets of presentation information,
only video for presentation information with high priority is reproduced for mutually overlapping parts and video for low priority presentation information is hidden, and
volume is lowered an amount corresponding to an area of a hidden part of an image when reproducing audio for the presentation information.

10. A device for presenting audio and video as described in any of claims 1 to 7, wherein:
when plural audio data to be reproduced in different sound reproduction regions is prepared, only audio data for a particular sound reproduction region selected in accordance with operator input is reproduced.

11. A method for presenting video on a specific display screen, and presenting audio related to the video, comprising the steps of:
preparing video data for reproducing an image image picture in which a region with a hierarchical structure is defined so that a high level region contains one or a plurality of low level regions, a low level region sound source being displayed in a low level region and a high level region sound source containing the low level region sound source being displayed in the high level region;
preparing audio data for reproducing sound produced by the low level region sound source, and sound produced by the high level region sound source; and
reproducing all or part of the image picture based on the video data, and reproducing sound relating to a specific sound source based on the audio data.

12. A method for presenting audio and video as described in claim 11, wherein:
when a command is inputted to select a particular sound source in an image picture being reproduced, sound relating to said particular sound source is selectively reproduced.

13. A method for presenting audio and video as described in claim 12, wherein:
when a command is inputted to display a particular low level region sound source enlarged, a region containing said particular low level region sound source is displayed enlarged, and sound relating to said particular low level region sound source is selectively reproduced.

14. A method for presenting audio and video as described in claim 11, wherein:
an image picture can be displayed desirably enlarged or reduced, and sound relating to a sound source at the highest level currently displayed in entirety is selectively reproduced.

15. A method for presenting audio and video as described in claim 14, wherein:
volume of sound relating to a sound source is controlled according to enlargement/reduction ratio at which said sound source is displayed.

16. A method for presenting audio and video as described in claim 11, wherein:
volume of an individual sound source can be set to a specific volume level based on an operator's instruction, and when sound relating to a sound source for which a specific volume level is set is reproduced, reproduction occurs at the set volume level.

17. A method for presenting audio and video as described in claim 11, wherein:
sound for a low level region sound source is recorded by placing near said low level region sound source a microphone with directivity capable of gathering sound produced primarily by said low level region sound source,
sound for a high level region sound source is recorded by placing at a position appropriate to gathering overall sound produced by said high level region sound source a microphone with directivity capable of gathering the overall sound produced by said high level region sound source, and
preparing audio data based on signals obtained from recorded sound.
